# EUROPEAN PATENT APPLICATION

(11) **EP 4 722 584 A1**
(43) Date of publication of application: **08.04.2026**
(21) Application number: 24810863.1
(22) Date of filing: 02.05.2024
(51) Int. Cl.: F21V 9/40, F21V 9/32, F21V 29/502, G02B 5/20, H01L 23/36, F21Y 115/10, F21Y 115/30

(54) **FLUORESCENT WHEEL AND LIGHT-EMITTING DEVICE**

(30) Priority: 25.05.2023 JP 2023085940
(71) Applicant: Panasonic Intellectual Property Management Co., Ltd., Kadoma-shi, Osaka 571-0057 (JP)
(72) Inventor: IIZAWA, Noboru, Osaka 571-0057 (JP); ASAYAMA, Kaito, Osaka 571-0057 (JP); NAKASHIMA, Noriyasu, Osaka 571-0057 (JP)
(74) Representative: Müller-Boré & Partner Patentanwälte PartG mbB
(86) International application number: PCT/JP2024/016859
(87) International publication number: WO 2024/241855

(57) **Abstract**

A phosphor wheel (1) that is transmissive, and includes: a fluorescent substrate (10) that includes a fluorescent material, and includes a first principal surface (11) and a second principal surface (12); a metal member (20) including: a main body (21) disposed on the first principal surface (11); and a plurality of first radiator fins (22) provided to the main body (21) and protruding in a direction from the second principal surface (12) toward the first principal surface (11); and a rotator (30) that rotates the fluorescent substrate (10) and the metal member (20) about an axis (B1) extending in a thickness direction of the fluorescent substrate (10). In a plan view of the fluorescent substrate (10), the fluorescent substrate (10) includes an annular region (A1) that does not overlap the metal member (20), and in the plan view of the fluorescent substrate (10), the plurality of first radiator fins (22) each extend in a direction from the axis (B1) toward an outer edge of the main body (21) and terminate before the outer edge.

## Description

### [Technical Field]

The present invention relates to a phosphor wheel and a light emitting device.

### [Background Art]

A conventional transmissive fluorescence emitting module (phosphor wheel) that generates fluorescence by being excited by excitation light has been known. A transmissive fluorescence emitting module is applied to a light emitting device such as a projector, for example.

Patent Literature (PTL) 1 discloses a light source device as an example of a transmissive fluorescence emitting module. This light source device (the transmissive fluorescence emitting module) includes a substrate for fluorescence formed of a plate-shaped glass member, a fluorescence generator, a dichroic film located between the substrate for fluorescence and the fluorescence generator, and a light emitter that emits excitation light that excites the fluorescence generator.

### [Citation List]

### [Patent Literature]

[PTL 1] Japanese Unexamined Patent Application Publication No. 2012-9242

### [Summary of Invention]

### [Technical Problem]

By the way, it is known that when the temperature of the fluorescence generator is increased by being irradiated with excitation light, a phenomenon in which less fluorescence is generated (a so-called thermal quenching phenomenon) occurs. For example, with the transmissive fluorescence emitting module disclosed in PTL 1, a thermal quenching phenomenon is likely to occur due to insufficient heat dissipation of the fluorescence generator, and as a result, the fluorescence emitter emits less fluorescence. As a result, in some cases, the efficiency of light usage achieved by such a transmissive fluorescence emitting module is reduced.

In addition, when the transmissive fluorescence emitting module is a phosphor wheel, it is desirable to suppress noise caused by rotation.

In view of the above, the present invention provides a phosphor wheel and a light emitting device that achieve high efficiency of light usage and suppressed noise.

### [Solution to Problem]

A phosphor wheel according to one aspect of the present invention is a phosphor wheel that is transmissive, and includes: a fluorescent substrate that includes a fluorescent material, and includes a first principal surface and a second principal surface on opposite sides from each other; a metal member including: a main body that is disposed on the first principal surface of the fluorescent substrate; and a plurality of first radiator fins provided to the main body, the plurality of first radiator fins protruding in a first direction from the second principal surface toward the first principal surface; and a rotator that rotates the fluorescent substrate and the metal member about an axis extending in a thickness direction of the fluorescent substrate. In this phosphor wheel, in a plan view of the fluorescent substrate, the fluorescent substrate includes an annular region that does not overlap the metal member, and in the plan view of the fluorescent substrate, the plurality of first radiator fins each extend in a direction from the axis toward an outer edge of the main body and terminate before the outer edge.

In addition, a light emitting device according to one aspect of the present invention includes the phosphor wheel described above.

### [Advantageous Effects of Invention]

According to the present invention, it is possible to provide a phosphor wheel and a light emitting device that achieve high efficiency of light usage and suppressed noise.

### [Brief Description of Drawings]

[FIG. 1]

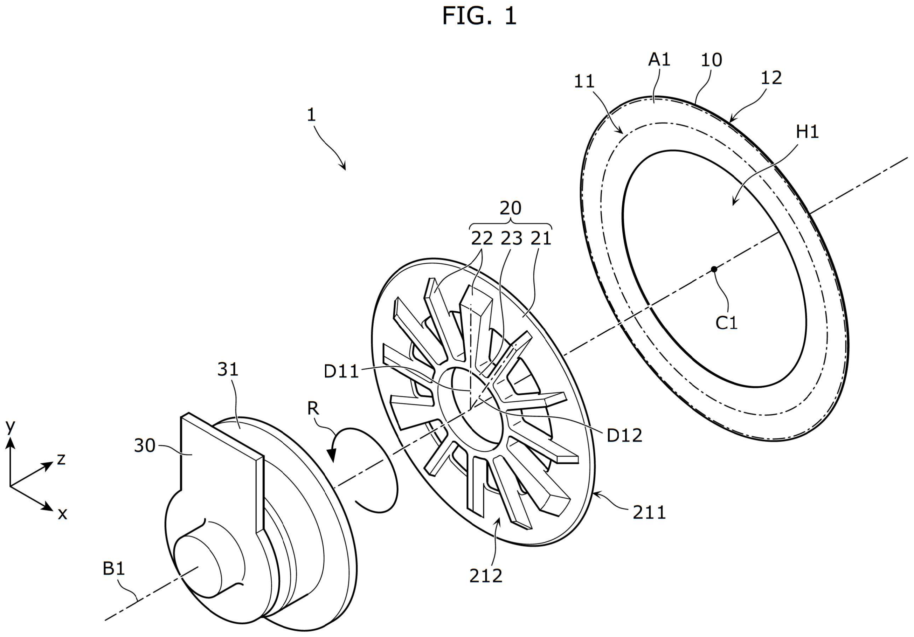

   FIG. 1 is an exploded perspective view of a phosphor wheel according to an embodiment.
[FIG. 2]

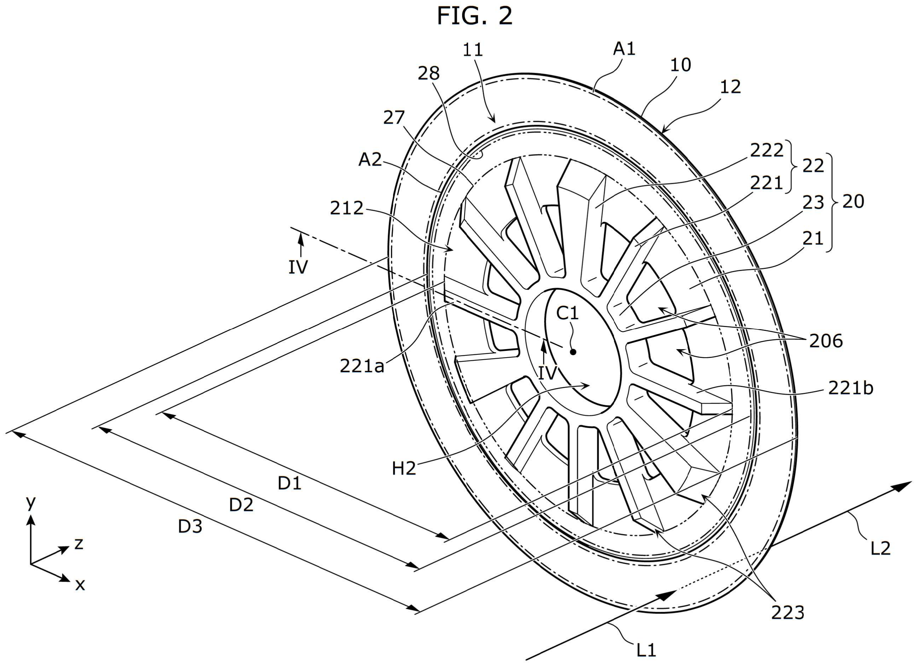

   FIG. 2 is a perspective view of a fluorescent substrate and a metal member according to the present embodiment.
[FIG. 3]

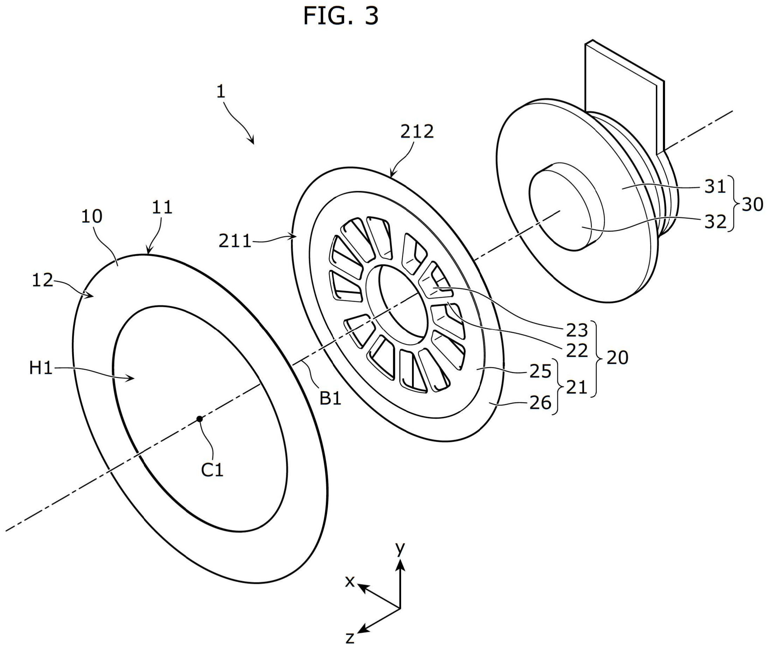

   FIG. 3 is an exploded perspective view of the fluorescent substrate and the metal member according to the present embodiment.
[FIG. 4]

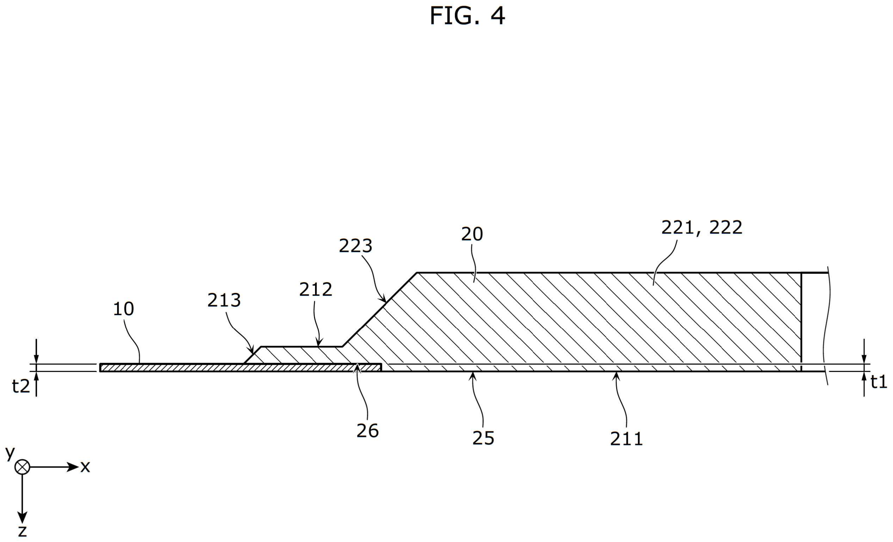

   FIG. 4 is a cross sectional view illustrating a cut surface of a portion of the fluorescent substrate and the metal member, which is taken along line IV-IV in FIG. 2.
[FIG. 5]

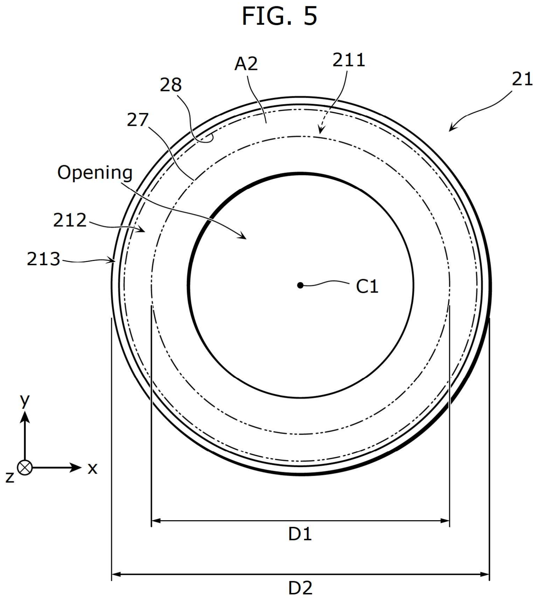

   FIG. 5 is a plan view illustrating a main body according to the embodiment.
[FIG. 6]

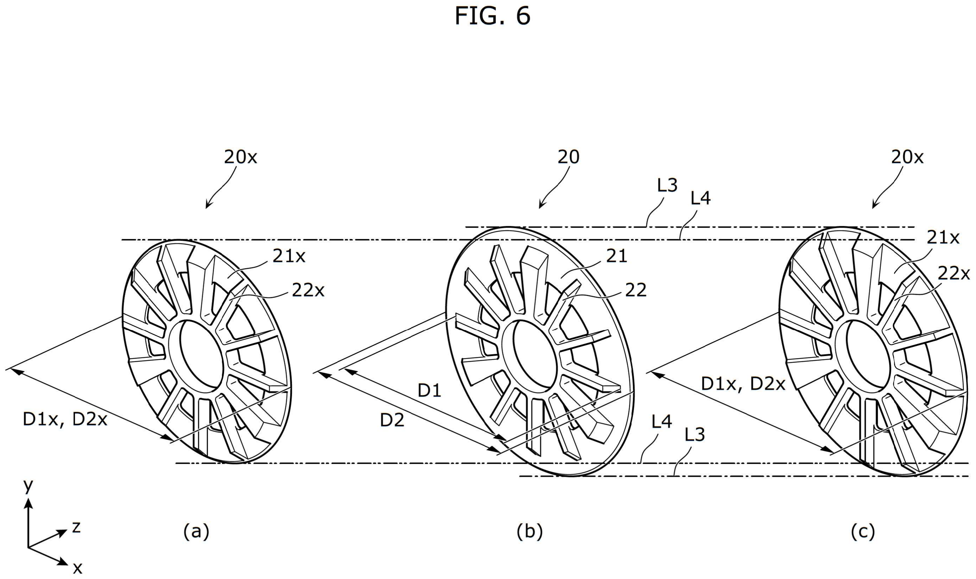

   FIG. 6 is a perspective view of the metal member according to the embodiment and a metal member according to a comparison example.
[FIG. 7]

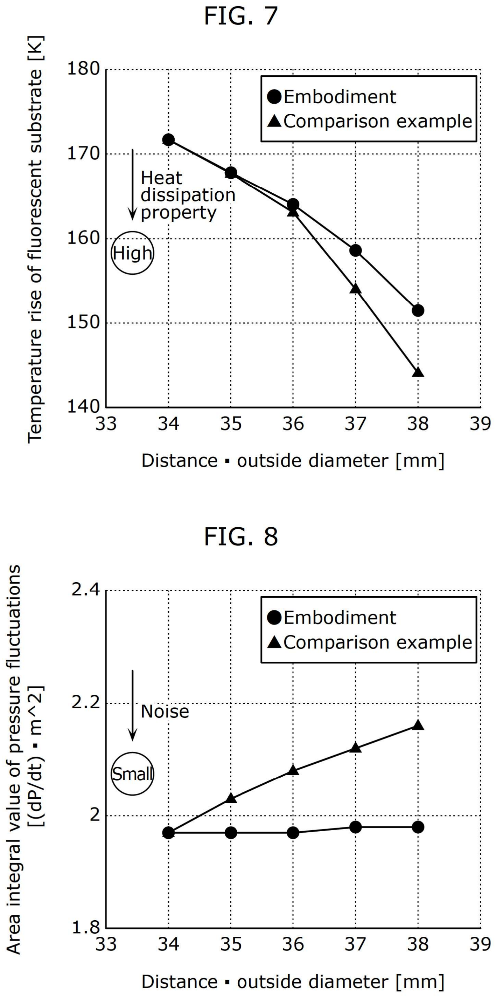

   FIG. 7 illustrates a graph showing the temperature rise of the fluorescent substrate when a distance and an outside diameter according to the comparison example and an outside diameter according to the embodiment are changed.
[FIG. 8]
   FIG. 8 illustrates a graph showing an area integral value of pressure fluctuations of the fluorescent substrate when the distance and the outside diameter according to the comparison example and the outside diameter according to the embodiment are changed.
[FIG. 9]

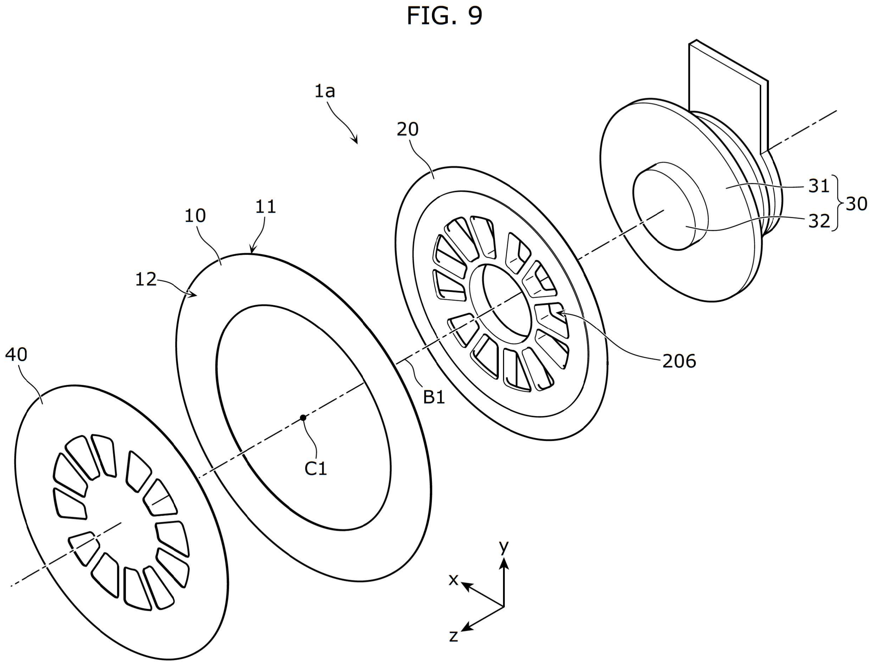

   FIG. 9 is an exploded perspective view of a phosphor wheel according to Variation 1.
[FIG. 10]

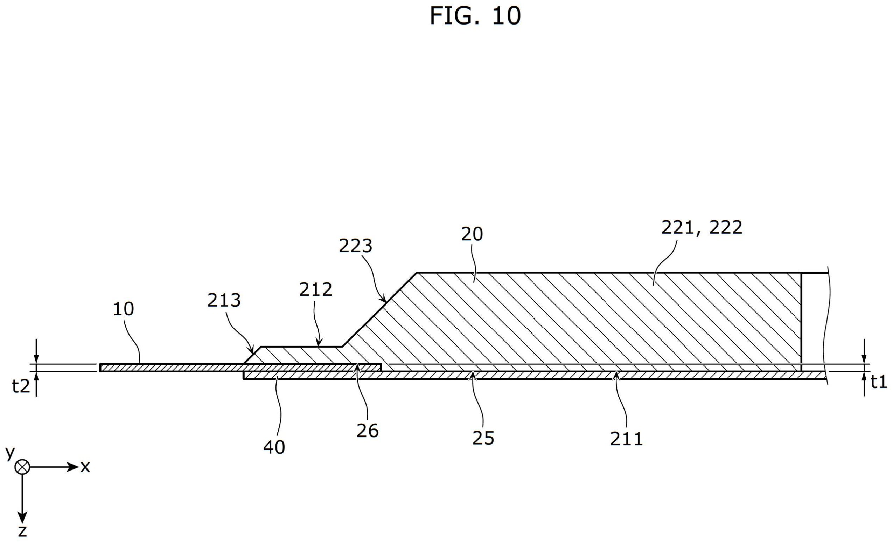

   FIG. 10 is a cross sectional view illustrating a cut surface of the portions of a substrate holder, a metal member, and a fluorescent substrate according to Variation 1.
[FIG. 11]

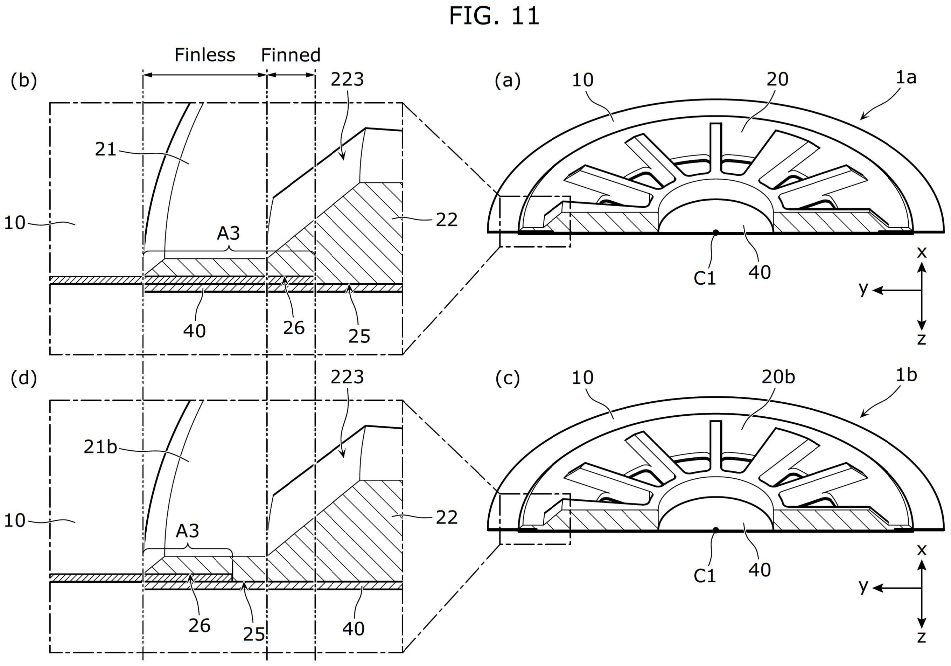

   FIG. 11 is a cross-sectional perspective view of a phosphor wheel according to Variation 2 and the phosphor wheel according to Variation 1.
[FIG. 12]

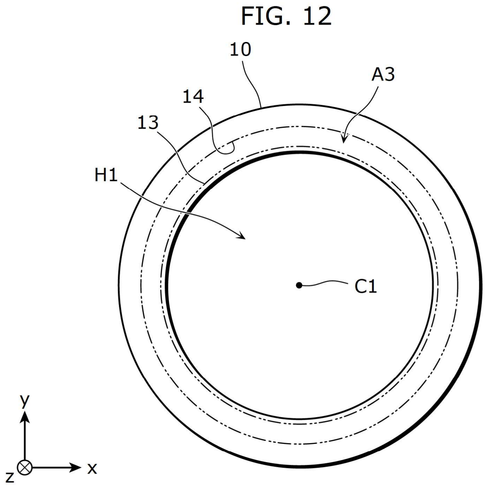

   FIG. 12 is a plan view of a fluorescent substrate according to Variation 2.
[FIG. 13]

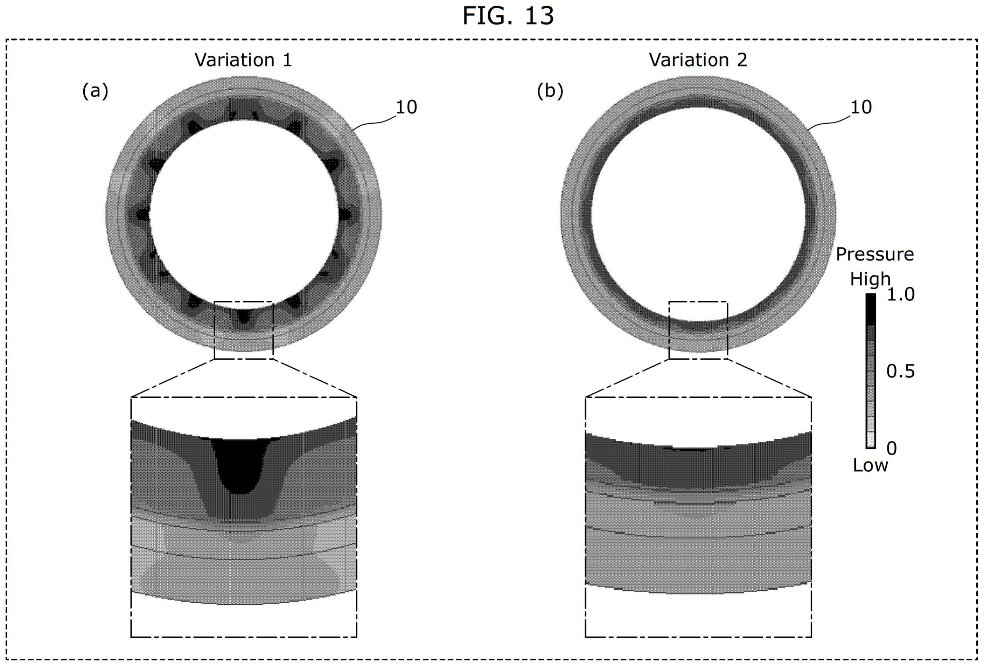

   FIG. 13 is a diagram illustrating the distribution of the stresses generated in the fluorescent substrate according to Variations 1 and 2.
[FIG. 14]

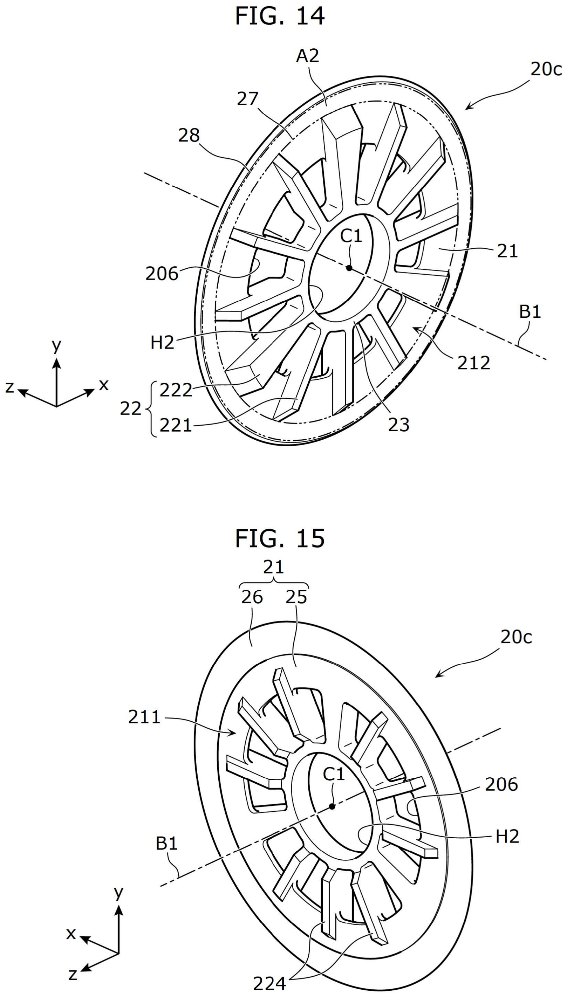

   FIG. 14 is a perspective view of a metal member according to Variation 3.
[FIG. 15]
   FIG. 15 is a perspective view of the metal member according to Variation 3.
[FIG. 16]

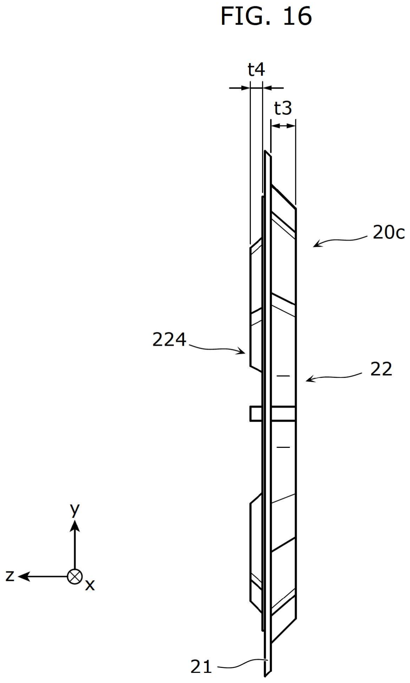

   FIG. 16 is a side view of the metal member according to Variation 3.
[FIG. 17]

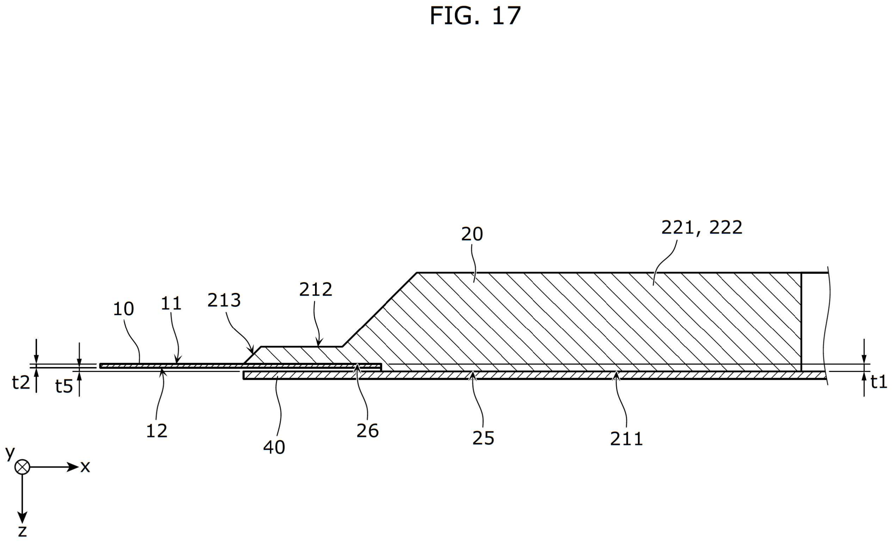

   FIG. 17 is a cross sectional view of the phosphor wheel according to Variation 1.
[FIG. 18]

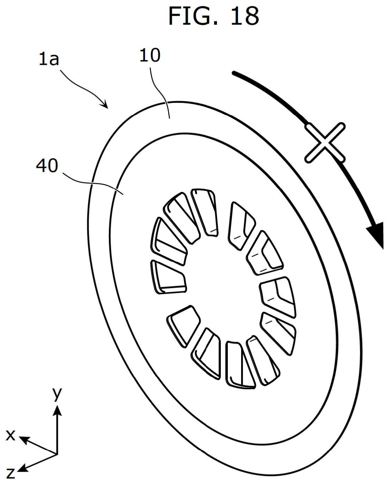

   FIG. 18 is a perspective view of the phosphor wheel according to Variation 1.
[FIG. 19]

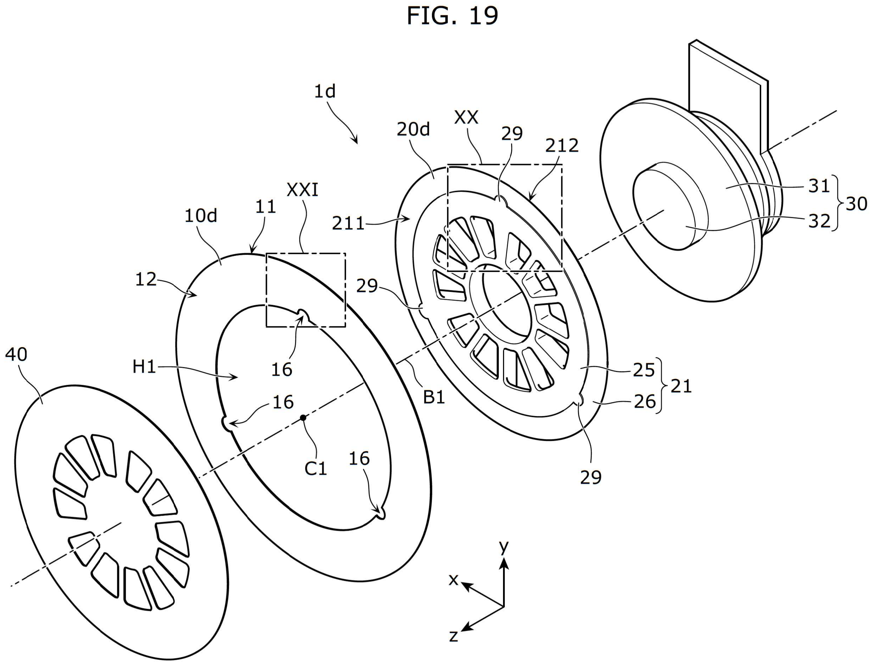

   FIG. 19 is an exploded perspective view of a phosphor wheel according to Variation 4.
[FIG. 20]

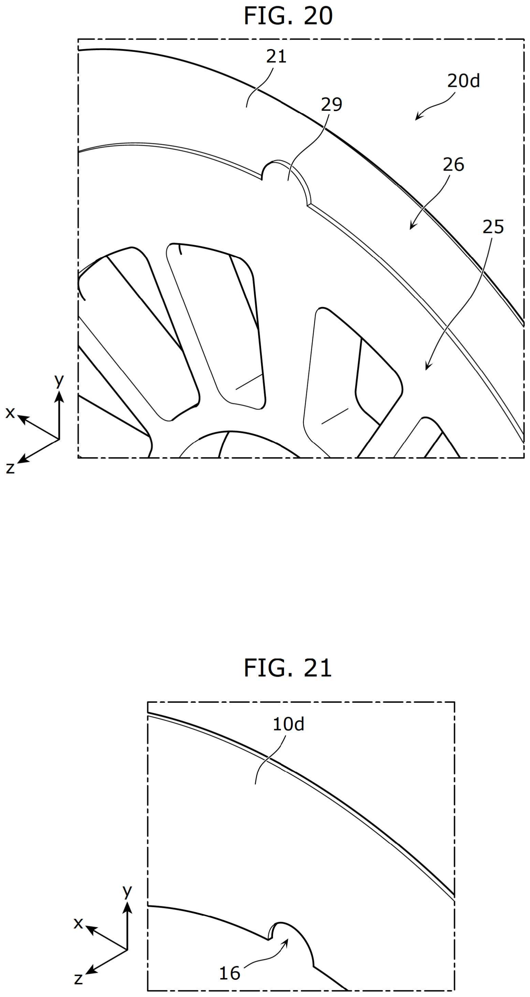

   FIG. 20 is a perspective view illustrating an enlarged region XX of FIG. 19.
[FIG. 21]
   FIG. 21 is a perspective view illustrating an enlarged region XXI of FIG. 19
[FIG. 22]

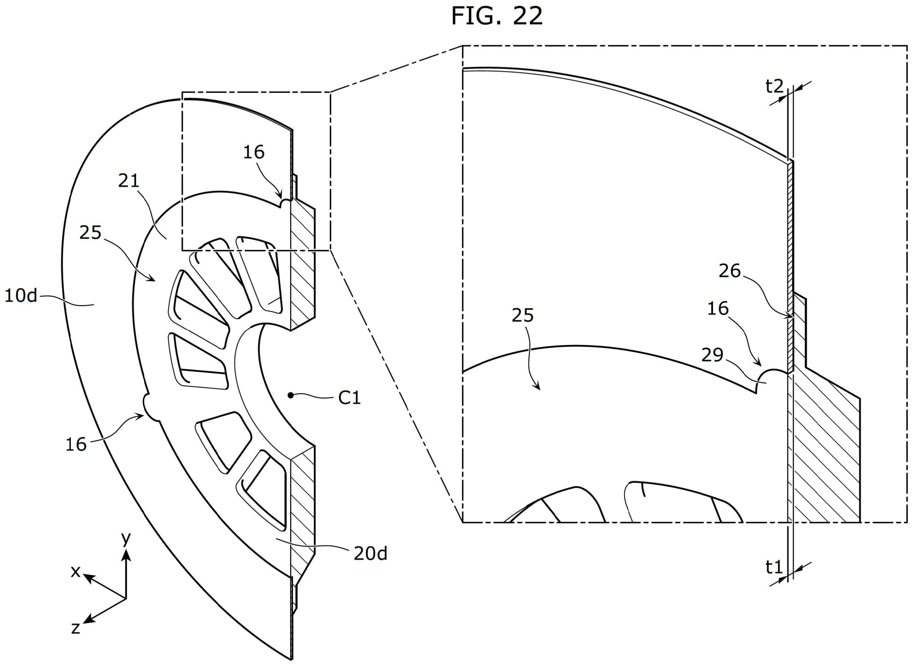

   FIG. 22 is a cross-sectional perspective view of a fluorescent substrate and a metal member according to Variation 4.
[FIG. 23]

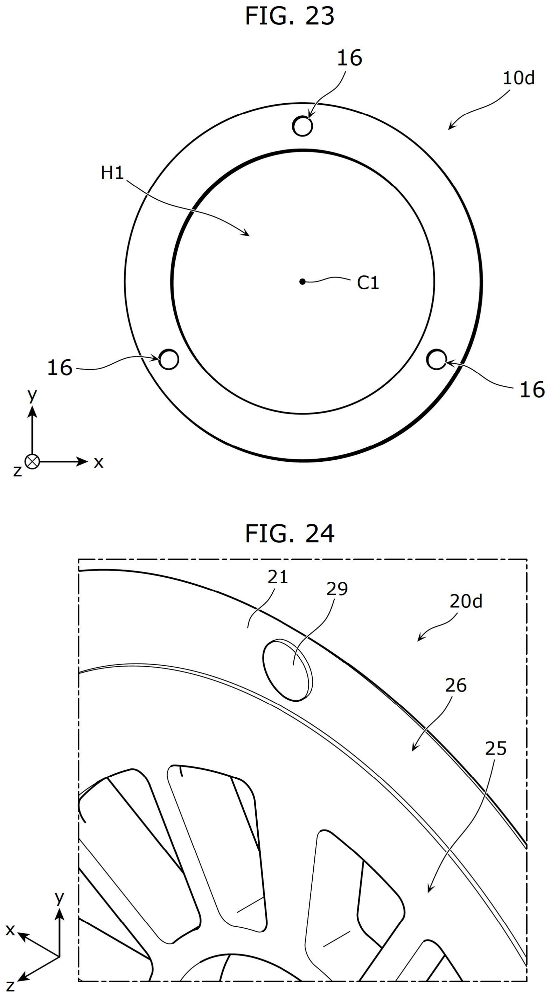

   FIG. 23 is a plan view illustrating another example of the fluorescent substrate according to Variation 4.
[FIG. 24]
   FIG. 24 is a perspective view illustrating another example of the metal member according to Variation 4.

### [Description of Embodiments]

The following describes in detail a phosphor wheel, for instance, according to embodiments of the present invention, with reference to the drawings.

Each of the embodiments described below shows a general or specific example. The numerical values, shapes, materials, structural components, the arrangement and connection of the structural components, manufacturing processes, and the processing order of the manufacturing processes, for instance, described in the following embodiments are examples, and thus are not intended to limit the present invention.

In addition, each diagram is a schematic diagram and not necessarily strictly illustrated. Accordingly, for example, scale sizes, etc. are not necessarily exactly represented. In each of the diagrams, substantially the same structural components are assigned with the same reference signs, and redundant descriptions will be omitted or simplified.

In the Description, a term that indicates a relation between structural components such as parallel or orthogonal, a term that indicates the shape of an element such as circular, and a numerical range do not necessarily have only strict meanings, and also cover substantially equivalent ranges that include a difference of about several percent, for example.

Furthermore, an x axis, a y axis, and a z axis represent three axes of a three-dimensional orthogonal coordinate system in the Description and Drawings of the present application. In the embodiments, two axes parallel to a first principal surface that a fluorescent substrate includes are referred to as an x axis and a y axis, and an axis orthogonal to the x axis and the y axis is referred to as a z axis.

### (Embodiment)

### [Configuration]

First, a configuration of phosphor wheel 1 according to the present embodiment is to be described with reference to the drawings. FIG. 1 is an exploded perspective view of phosphor wheel 1 according to the present embodiment.

As illustrated in FIG. 1, phosphor wheel 1 is a module that includes fluorescent substrate 10 including a fluorescent material, metal member 20, and rotator 30. Phosphor wheel 1 is used in a light emitting device typified by a projector and an illumination device, as an example. In the present embodiment, phosphor wheel 1 is used in a projector.

In the present embodiment, rotator 30 rotates fluorescent substrate 10, for instance, about axis B1 in the direction of arrow R illustrated in FIG. 1. Axis B1 extends in parallel with the z axis.

FIG. 2 is a perspective view of fluorescent substrate 10 and metal member 20 according to the present embodiment. Fluorescent substrate 10 emits transmitted light L2 that includes fluorescence by receiving excitation light L1 output from a light emitter, for example. Phosphor wheel 1 is a light-transmissive module that uses transmitted light L2 as projection light that the above-described projector outputs. Thus, phosphor wheel 1 is used as a light-transmissive phosphor wheel. Here, the light emitter is a light source that emits excitation light L1. Excitation light L1 is light that excites a fluorescent material included in fluorescent substrate 10. The light emitter is, for example, a semiconductor laser light source or a light emitting diode (LED) light source, and emits excitation light L1 having a predetermined color (wavelength) by being driven by a driving current. As an example, the light emitter emits, as excitation light L1, a laser beam in a range from near ultra violet light to blue light, which has a peak wavelength in a range of from 380 nm to 490 nm. At this time, excitation light L1 has a peak wavelength of 455 nm, for example, and is blue light.

The following describes structural components included in phosphor wheel 1.

First, fluorescent substrate 10 is to be described.

Fluorescent substrate 10 is a substrate that includes two principal surfaces on opposite sides from each other, and has a plate shape. The two principal surfaces are first principal surface 11 and second principal surface 12. Here, first principal surface 11 and second principal surface 12 are flat.

In the present embodiment, a view of a structural component (fluorescent substrate 10, for example) in the negative z-axis direction is referred to as a plan view. In other words, the plan view refers to the perspective seen from the first principal surface 11 side of fluorescent substrate 10, for example. Fluorescent substrate 10 is a substrate circularly shaped in the plan view, and thus is a substrate having a circular plate shape. Here, the center of the circular shape that fluorescent substrate 10 has is referred to as center point C1. As illustrated in FIG. 1, axis B1 passes through center point C1 of fluorescent substrate 10. Furthermore, fluorescent substrate 10 is provided with first through-hole H1. Accordingly, fluorescent substrate 10 specifically has an annular shape. First through-hole H1 is a hole penetrating through fluorescent substrate 10 in the thickness direction of fluorescent substrate 10 (the z-axis direction), and has a circular shape in the plan view. The center of the circular shape that first through-hole H1 has overlaps center point C1. Thus, fluorescent substrate 10 is provided in a circular ring shape on a circumference equally distant from center point C1 of fluorescent substrate 10, and in a belt shape along the circumferential direction in the plan view.

Outside diameter D3 (that is, the diameter of an outer circle in the plan view) of fluorescent substrate 10 having an annular shape is optionally in a range of from 30 mm to 90 mm, more optionally in a range of from 35 mm to 70 mm, and yet more optionally in a range of from 40 mm to 50 mm, as an example, but the outside diameter is not limited to this example. When phosphor wheel 1 is applied to a projector, the outside diameter of fluorescent substrate 10 is determined to allow fluorescent substrate 10 to fit in the casing of the projector.

In addition, the inside diameter (that is, the diameter of the inner circle in the plan view) of fluorescent substrate 10 is smaller than the outside diameter of fluorescent substrate 10, and is optionally in a range of from 15 mm to 45 mm, more optionally in a range of from 17.5 mm to 35 mm, and yet more optionally in a range of from 20 mm to 25 mm, as an example, but the inside diameter is not limited to this example. The inside diameter of fluorescent substrate 10 is the diameter of first through-hole H1. A portion of metal member 20 which will be described later is fitted into first through-hole H1.

The thickness of fluorescent substrate 10 (that is, the length thereof in the z-axis direction) is optionally in a range of from 50 µm to 700 µm. The thickness of fluorescent substrate 10 is more optionally in a range of from 80 µm to 500 µm, and yet more optionally in a range of from 100 µm to 300 µm.

Fluorescent substrate 10 includes fluorescent material. Stated differently, fluorescent substrate 10 is a member that consists only of a fluorescent material that is a principal component. More specifically, fluorescent substrate 10 is a substrate that is constituted only by a sintered fluorescent substance that consists only of a fluorescent material.

Note that here, a sintered fluorescent substance in this Specification is to be described.

A sintered fluorescent substance is a baked body obtained by baking raw-material powder of the above fluorescent material that is a principal component (an example of which is a granulated body obtained by granulating raw-material power of the fluorescent material) at a temperature lower than the melting point of the fluorescent material. During the baking process, raw-material powder particles of the sintered fluorescent substance are bonded. Accordingly, the sintered fluorescent substance requires almost no binder for bonding granulated bodies. More specifically, the sintered fluorescent substance does not need a binder at all. An example of a binder is a transparent resin in PTL 1 stated above. In addition, a known material such as an Al₂O₃ material or a glass material (that is, SiO_{d} (0<d≤2)) is used for the binder. Note that similarly, not just the binder, the sintered fluorescent substance needs almost no material (hereinafter, other materials) other than a fluorescent material included in the sintered fluorescent substance, or more specifically, does not require any of such other materials.

For example, when the entire volume of the sintered fluorescent substance is considered to be 100 vol%, the volume of the fluorescent material may occupy 70 vol% or more of the entire volume of the sintered fluorescent substance. Furthermore, the volume of the fluorescent material occupies optionally 80 vol% or more, more optionally 90 vol% or more, or yet more optionally 95 vol% or more of the entire volume of the sintered fluorescent substance.

Note that stated differently, when the entire volume of the sintered fluorescent substance is considered to be 100 vol%, the volume of other materials (for example, a binder) may occupy less than 30 vol% of the entire volume of the sintered fluorescent substance. Furthermore, the volume of other materials (for example, a binder) occupies optionally 20 vol% or less, more optionally 10 vol% or less, or yet more optionally 5 vol% or less of the entire volume of the sintered fluorescent substance.

If the volume percent of other materials in the entire volume of the sintered fluorescent substance is high (in other words, the proportion of the volume of the other materials is high), phonon scattering occurs due to a defect that is present at the interface between the fluorescent material and the other materials. As a result, the thermal conductivity of the sintered fluorescent substance decreases. In particular, if the volume of the other materials occupies 30 vol% or more, thermal conductivity significantly decreases. Moreover, more non-radiative recombination occurs at the interface, and thus efficiency of light emission decreases. In other words, the lower the volume percent of the other materials (or in other words, the proportion of the volume of the other materials) in the entire volume of the sintered fluorescent substance is, the higher the thermal conductivity and efficiency of light emission become. The sintered fluorescent substance according to the present invention includes other materials, the volume of which is less than 30 vol% in the entire volume of the sintered fluorescent substance.

Here, a fluorescent material is to be described.

The fluorescent material includes a crystalline phase having a garnet structure, for example. In the present embodiment, the fluorescent material consists only of a crystalline phase having a garnet structure, for example. The garnet structure is a crystalline structure represented by the general formula A₃B₂C₃O₁₂. One or more rare earth elements such as Ca, Y, La, Ce, Pr, Nd, Sm, Eu, Gd, Tb, and Lu are used as element A, and one or more elements such as Mg, Al, Si, Ga, and Sc are used as element B, and one or more elements such as Al, Si, and Ga are used as element C. Examples of such a garnet structure include yttrium aluminum garnet (YAG), lutetium aluminum garnet (LuAG), lutetium calcium magnesium silicon garnet (Lu₂CaMg₂Si₃O₁₂), and terbium aluminum garnet (TAG).

In the present embodiment, the fluorescent material includes the crystalline phase represented by (Y₁₋ₓCeₓ)₃Al₂Al₂Al₃O₁₂ (that is, (Y₁₋ₓCeₓ)₃Al₅O₁₂) (0.0001 ≤ x < 0.1), stated differently, YAG.

When the fluorescent material includes YAG, there are cases where Al₂O₃ is used as the raw material. In this case, there are cases where Al₂O₃ remains as an unreacted raw material in the sintered fluorescent substance. However, Al₂O₃ that is an unreacted raw material is different from the binder described above. If the entire volume of the sintered fluorescent substance is considered to be 100 vol%, the volume of Al₂O₃ that is an unreacted raw material in the entire volume of the sintered fluorescent substance is 5 vol% or less.

Note that the crystalline phase included in the fluorescent material may be a solid solution that includes a plurality of garnet crystalline phases having different chemical compositions. An example of such a solid solution is a solid solution ((1-a)(Y₁₋ₓCeₓ)₃Al₅O₁₂ ▪ a(Lu_{1-y}Ce_{y})₃Al₂Al₃O₁₂ (0 < a < 1)) that includes a garnet crystalline phase represented by (Y₁₋ₓCeₓ)₃Al₂Al₂Al₃O₁₂ (0.001 ≤ x < 0.1) and a garnet crystalline phase represented by (Lu_{1-y}Ce_{y})₃Al₂Al₃O₁₂ (0.001 ≤ y < 0.1). Furthermore, an example of such a solid solution is a solid solution ((1-b)(Y₁₋ₓCeₓ)₃Al₂Al₃O₁₂ ▪ b(Lu_{1-z}Ce_{z})₂CaMg₂Si₃O₁₂ (0 < b < 1)) that includes a garnet crystalline phase represented by (Y₁₋ₓCeₓ)₃Al₂Al₂Al₃O₁₂ (0.001 ≤ x < 0.1) and a garnet crystalline phase represented by (Lu_{1-z}Ce_{z})₂CaMg₂Si₃O₁₂ (0.0015 ≤ z < 0.15). The fluorescent material includes a solid solution that includes a plurality of garnet crystalline phases having different chemical compositions, and thus the spectrum of fluorescence emitted by the fluorescent material is further increased and contains more green light components and more red light components. As a result, it is possible to provide a projector that emits projection light having a wide color gamut.

The crystalline phases included in the fluorescent material may include a crystalline phase having a chemical composition that deviates from the crystalline phase represented by the above-stated general formula A₃B₂C₃O₁₂. An example of such a crystalline phase is (Y₁₋ₓCeₓ)₃Al_{2+δ}Al₃O₁₂ (where δ is a positive number) that includes richer Al than the crystalline phase represented by (Y₁₋ₓCeₓ)₃Al₂Al₃O₁₂ (0.001 ≤ x < 0.1). Furthermore, another example of such a crystalline phase is (Y₁₋ₓCeₓ)_{3+ζ}Al₂Al₃O₁₂ (where ζ is a positive number) that includes richer Y than the crystalline phase represented by (Y₁₋ₓCeₓ)₃Al₂Al₃O₁₂ (0.001 ≤ x < 0.1). Such crystalline phases have chemical compositions that deviate from the crystalline phase represented by the general formula A₃B₂C₃O₁₂, but maintain the garnet structure.

Furthermore, the crystalline phases included in the fluorescent material may include a different crystalline phase having a structure other than the garnet structure.

Fluorescent substrate 10 includes region A1 that has an annular shape and does not overlap metal member 20 in the plan view. In FIG. 1 and FIG. 2, region A1 corresponds to a region between two circles indicated by the dash-dot lines. The center of the annular shape that is the shape of region A1 overlaps center point C1 of fluorescent substrate 10. Excitation light L1 enters region A1. More specifically, excitation light L1 emitted from the light emitter enters region A1 through first principal surface 11 (that is, from the z-axis negative side).

In region A1 that fluorescent substrate 10 includes, the fluorescent material that includes YAG receives excitation light L1 and emits fluorescence. More specifically, the fluorescent material is irradiated with excitation light L1, and thus emits fluorescence as wavelength-converted light. Hence, the wavelength-converted light emitted from the fluorescent material has a wavelength longer than the wavelength of excitation light L1.

In the present embodiment, wavelength-converted light emitted from the fluorescent material includes fluorescence that is yellow light. For example, the fluorescent material absorbs light having a wavelength in a range of from 380 nm to 490 nm, and emits fluorescence that is yellow light and has a peak wavelength in a range of from 490 nm to 580 nm. Since the fluorescent material includes YAG, the fluorescent material can readily emit fluorescence having a peak wavelength in a range of from 490 nm to 580 nm.

In the present embodiment, as illustrated in FIG. 2, the wavelength of a portion of excitation light L1 that has entered is converted by the fluorescent material, and the portion of excitation light L1 passes through fluorescent substrate 10 and exits through second principal surface 12. In addition, the wavelength of another portion of excitation light L1 that has entered is not converted by the fluorescent material, and the other portion of excitation light L1 passes through fluorescent substrate 10 and exits through second principal surface 12. Transmitted light L2 passing through fluorescent substrate 10 includes fluorescence that is yellow light having a converted wavelength and excitation light L1 that is blue light having a wavelength not converted. Thus, transmitted light L2 is a combination of such light, and is while light.

Fluorescent substrate 10 does not need to be supported by another structural component. Thus, fluorescent substrate 10 has a rigid property. Since fluorescent substrate 10 includes a sintered fluorescent substance and has a thickness in the above range, fluorescent substrate 10 has a rigid property. As compared with, for example, the fluorescence generator formed with a coating material that includes a fluorescent substance and a transparent resin, which is disclosed in PTL 1, fluorescent substrate 10 according to the present embodiment is much more rigid.

In the present embodiment, excitation light L1 enters through first principal surface 11, and transmitted light L2 exits through second principal surface 12, but are not limited to these examples. Excitation light L1 may enter through second principal surface 12, and transmitted light L2 may exit through first principal surface 11.

Next, metal member 20 is to be described.

Metal member 20 is a structural component includes a metal material. Metal member 20 is disposed on; that is, provided to one principal surface of fluorescent substrate 10. In the present embodiment, as illustrated in FIG. 1 and FIG. 2, metal member 20 is located on the z-axis negative side with respect to fluorescent substrate 10, and is provided to first principal surface 11. As will be described in detail later, as the material of metal member 20, Al that is lightweight and highly heat-conductive is used, taking into consideration thermal conductivity and a load onto rotator 30 that is a motor.

Metal member 20 according to the present embodiment includes main body 21, a plurality of first radiator fins 22, and ring member 23.

Main body 21 is a member having a plate shape, and provided, being stacked over fluorescent substrate 10. Main body 21 includes two principal surfaces on opposite sides from each other. The two principal surfaces are third principal surface 211 and fourth principal surface 212. Third principal surface 211 and fourth principal surface 212 are planes parallel to each other, herein.

Here, the positional relationship between metal member 20 (main body 21) and fluorescent substrate 10 is to be described with reference to FIG. 3 and FIG. 4.

FIG. 3 is an exploded perspective view of fluorescent substrate 10 and metal member 20 according to the present embodiment. FIG. 4 is a cross sectional view illustrating a cut surface of a portion of fluorescent substrate 10 and metal member 20, which is taken along line IV-IV in FIG. 2.

As illustrated in FIG. 3 and FIG. 4, main body 21 includes fit region 25 and holding region 26 on the third principal surface 211 side.

Fit region 25, in third principal surface 211, is a region protruding more toward fluorescent substrate 10 (i.e., in the positive z-axis direction) than holding region 26 is, and is fitted into first through-hole H1 of fluorescent substrate 10. Fit region 25 has a circular shape in the plan view, and the diameter of the circular shape is large enough to be fitted into first through-hole H1.

Holding region 26, in third principal surface 211, is a region that is bonded to first principal surface 11 of fluorescent substrate 10 via a bonding layer, and holds fluorescent substrate 10. Holding region 26 is recessed in the negative z-axis direction by thickness t1 compared to fit region 25 as illustrated in FIG. 4. FIG. 4 also indicates thickness t2 (length in the z-axis direction) of fluorescent substrate 10. Thickness t1 may be the same as the sum of thickness t2 and a thickness of the above-described bonding layer. Holding region 26 has an annular shape in the plan view.

In addition, one example of the above-described bonding layer is as follows. A silicone resin is used for the bonding layer, in order to reduce a difference between thermal expansion coefficients of metal member 20 and fluorescent substrate 10. In addition, the bonding layer may be another epoxy resin or a highly heat-conductive adhesive that contains nano Ag or nano Cu. The thickness of the bonding layer is optionally in a range of from 5 µm to 40 µm, and more optionally in a range of from 10 µm to 20 µm. As described above, since the bonding layer is provided, it can be said that metal member 20 according to the present embodiment is bonded to one principal surface (first principal surface 11) of fluorescent substrate 10.

Furthermore, main body 21 has a plate shape as described above, but this plate shape is not limited to a rectangular parallelepiped, and also means a cylindrical shape, a truncated cone shape, or the like.

As illustrated in FIG. 1 to FIG. 3, the shape of main body 21 is a circular shape in the plan view. The area of third principal surface 211 that main body 21 includes is greater than the area of fourth principal surface 212 that main body 21 includes. In other words, the shape of main body 21 is a truncated cone shape. As illustrated in FIG. 4, main body 21 having a truncated cone shape includes first side surface 213. First side surface 213 is a slanting surface that spreads from fourth principal surface 212 to third principal surface 211. First side surface 213 that is a slanting surface is not parallel to the z axis.

FIG. 5 is a plan view illustrating main body 21 according to the present embodiment. It should be noted that, in FIG. 5, illustrations of the plurality of first radiator fins 22 and ring member 23 are omitted for simplicity. Since an opening (through-hole) is provided at the center of main body 21, the shape of main body 21 is a truncated cone shape provided with the opening. In the plan view, the shape of main body 21 is an annular shape. The opening is a hole penetrating through main body 21 in the thickness direction of fluorescent substrate 10 (the z-axis direction), and has a circular shape in the plan view. The center of the annular shape that is the shape of main body 21 overlaps center point C1 of fluorescent substrate 10.

Outside diameter D2 of main body 21 is indicated in FIG. 2 and FIG. 5. Outside diameter D2 of main body 21 is a diameter of the outer circumference of third principal surface 211 having an annular shape. Outside diameter D2 of main body 21 is smaller than outside diameter D3 of fluorescent substrate 10. Note that here, outside diameter D2 of main body 21 means the diameter of third principal surface 211 of main body 21. Outside diameter D2 of main body 21 is optionally in a range of from 20 mm to 70 mm, more optionally in a range of from 25 mm to 55 mm, and yet more optionally in a range of from 30 mm to 40 mm, as an example, but outside diameter D2 is not limited to this example. Note that in the present embodiment, outside diameter D2 of main body 21, for example, is 36 mm, and thus the radius of main body 21 is 18 mm.

It is sufficient if the inside diameter of main body 21 is smaller than the outside diameter of main body 21. The inside diameter of main body 21 here is smaller than the inside diameter of fluorescent substrate 10. The inside diameter of main body 21 is also the diameter of the above-described opening.

As illustrated in FIG. 2, in a plan view, main body 21 is provided with region A2 in which the plurality of first radiator fins 22 are not provided. As illustrated in FIG. 5, region A2 has an annular shape in the plan view, and corresponds to the region between the two circles indicated by dash-double-dot lines. Region A2 corresponds to the region between inner circumference 27 and outer circumference 28 in the plan view. In the plan view, inner circumference 27 is closer to center point C1 than outer circumference 28 is, and outer circumference 28 is farther from center point C1 than inner circumference 27 is. It should be noted that outer circumference 28 of region A2 is an outer circumference of fourth principal surface 212 having an annular shape in the plan view. The center of the annular shape that is the shape of region A2 overlaps center point C1 of fluorescent substrate 10 in the plan view, and the respective centers of inner circumference 27 and outer circumference 28 also overlap center point C1 in the plan view.

Here, the thickness of main body 21 is to be described.

The thickness of main body 21 (the length in the z-axis direction) may be greater than the thickness of fluorescent substrate 10. The reason is that this improves heat conductivity. On the other hand, when the thickness of fluorescent substrate 10 excessively increases, a load applied onto rotator 30 that is a motor increases, and the life thereof shortens. Thus, the thickness of main body 21 is optionally in a range of from 0.2 mm to 50 mm, more optionally in a range of from 0.5 mm to 10 mm, and yet more optionally in a range of from 1 mm to 5 mm, as an example. The greater the thickness of main body 21 is, the more readily the heat is dissipated from fluorescent substrate 10. On the other hand, the smaller the thickness of main body 21 is, the less the volume of main body 21 is, or stated differently, the less the weight of main body 21 is. Accordingly, rotator 30 can rotate fluorescent substrate 10, for instance, using less energy. Thus, the thickness of main body 21 is optionally in the above-described ranges.

Phosphor wheel 1 according to the present embodiment includes fluorescent substrate 10, metal member 20, and rotator 30. Metal member 20 is bonded to first principal surface 11 of fluorescent substrate 10. Accordingly, even when heat is generated in fluorescent substrate 10 due to being irradiated with excitation light L1, the heat is readily transferred from fluorescent substrate 10 to metal member 20. In general, the metal material of metal member 20 has higher thermal conductivity than that of a fluorescent material such as YAG. Accordingly, the heat is readily transferred inside metal member 20, and readily dissipated from the surface of metal member 20 that is exposed to the atmosphere. Thus, since fluorescent substrate 10 and metal member 20 are configured as above, such heat is readily dissipated from fluorescent substrate 10. As a result, heat dissipation property of fluorescent substrate 10 can be enhanced.

Here, one example of the advantageous effects yielded by phosphor wheel 1 according to the present embodiment is to be described.

As described above, when a thermal quenching phenomenon occurs in the transmissive fluorescence emitting module disclosed in PTL 1, the efficiency of light usage decreases. However, in the present embodiment, the heat is readily dissipated from fluorescent substrate 10, and thus a rise in temperature of fluorescent substrate 10 due to being irradiated with excitation light L1 can be inhibited. Accordingly, a thermal quenching phenomenon is less likely to occur, and thus a decrease in fluorescence can be inhibited.

Furthermore, phosphor wheel 1 according to the present embodiment does not include, for instance, a structural component for supporting fluorescent substrate 10. An example of such a structural component is a substrate for fluorescence disclosed in PTL 1. The substrate for fluorescence is made of a plate-shaped glass member that supports the fluorescence generator, for instance.

Here, behavior of light disclosed in PTL 1 is to be described. PTL 1 discloses that excitation light enters the substrate for fluorescence from the atmosphere. Furthermore, the excitation light that has entered the substrate for fluorescence passes through the substrate for fluorescence and enters the fluorescence generator, so that fluorescence is generated by the fluorescence generator. By the way, in PTL 1, a portion of the excitation light that enters the substrate for fluorescence from the atmosphere is reflected back toward the atmosphere, due to a difference between the index of refraction of the substrate for fluorescence and the index of refraction of the atmosphere. Thus, loss of excitation light occurs at the interface between the substrate for fluorescence and the atmosphere. As a result, as compared with the case where a portion of the excitation light is not reflected, the excitation light that enters the fluorescence generator decreases, and thus fluorescence generated in the fluorescence generator also decreases. Consequently, the transmissive fluorescence emitting module disclosed in PTL 1 has a problem that the efficiency of light usage is low.

In contrast, in the present embodiment, as described above, phosphor wheel 1 according to the present embodiment does not include a structural component for supporting fluorescent substrate 10 (for example, the above-described substrate for fluorescence). Accordingly, loss of excitation light L1 as stated above does not occur, and thus excitation light L1 that enters fluorescent substrate 10 increases. As a result, fluorescence generated by the fluorescent material in fluorescent substrate 10 increases.

To summarize the above, in phosphor wheel 1 according to the present embodiment, a thermal quenching phenomenon is less likely to occur and loss of excitation light L1 does not occur, and thus efficiency of light usage can be increased.

In the present embodiment, metal member 20 includes main body 21.

Since main body 21 has the above-described configuration, the area in which fluorescent substrate 10 and metal member 20 (here, main body 21) are bonded to each other further increases. Accordingly, even when heat is generated in fluorescent substrate 10 due to being irradiated with excitation light L1, the heat is more readily dissipated from fluorescent substrate 10.

The following further describes ring member 23. Ring member 23 is a member that is connected to each of the plurality of first radiator fins 22. Ring member 23 has an annular shape in the plan view, and a bottomless cylindrical shape. In other words, ring member 23 is provided with a circular opening at the center in the plan view, and this opening is second through-hole H2. In the plan view, the center of second through-hole H2 overlaps center point C1. Second through-hole H2 is a hole through which metal member 20 penetrates in the thickness direction (the z-axis direction) of metal member 20. In the present embodiment, rotation shaft 32 that is a motor shaft included in rotator 30 passes through and is fitted to second through-hole H2.

Furthermore, in the plan view, the center of the circular shape of first through-hole H1, the opening of main body 21 illustrated in FIG. 5, and the center of the circular shape of second through-hole H2 overlap center point C1 of fluorescent substrate 10.

Furthermore, the plurality of first radiator fins 22 that metal member 20 includes are to be described.

The plurality of first radiator fins 22 are arranged on main body 21 to protrude in the first direction that is the direction from second principal surface 12 toward first principal surface 11 (i.e., the negative z-axis direction). In other words, the plurality of first radiator fins 22 are projections that protrude in a direction opposite the direction from main body 21 to fluorescent substrate 10. The plurality of first radiator fins 22 are regions in contact with main body 21 and protrude in the negative z-axis direction. The plurality of first radiator fins 22 are identical in thickness (the thickness in the z-axis direction), but are not limited to this. The thickness may be greater than the thickness of main body 21. The thickness of the plurality of first radiator fins 22 is optionally in a range of from 1 mm to 150 mm, more optionally in a range of from 2 mm to 30 mm, and yet more optionally in a range of from 3 mm to 10 mm, as an example. The greater the thickness of the plurality of first radiator fins 22 is, the more the heat dissipation effects can be enhanced. On the other hand, when the thickness of the plurality of first radiator fins increases, the weight increases, leading to an increase in load applied onto rotator 30 that is a motor.

In the plan view of metal member 20, the plurality of first radiator fins 22 are arranged radially with respect to axis B1 (center point C1). In the present embodiment, the plurality of first radiator fins 22 extend radially with respect to center point C1 and spread at equal intervals in the plan view in the region except ring member 23 and second through-hole H2.

In the present embodiment, the case where the plurality of first radiator fins 22 have two different widths is illustrated as an example. As illustrated in FIG. 2, the plurality of first radiator fins 22 include nine first radiator fins 221 and three first radiator fins 222. The width of each of first radiator fins 221 in the circumference direction is smaller than the width of each of first radiator fins 222 in the circumference direction. The width of first radiator fin 222 is made larger, as illustrated in FIG. 1 to FIG. 3, in order to be fixed to rotator 30 (more specifically, disc 31 that rotator 30 includes) with screws. Note that the width of first radiator fin 221 in the circumference direction may be the same as the width of first radiator fin 222 in the circumference direction.

In the plan view, each of the plurality of first radiator fins 22 extends in the direction from axis B1 toward the outer edge of main body 21. The outer edge of main body 21 is an outer circumference of fourth principal surface 212 having an annular shape in the plan view. Note that, in the present embodiment, the outer circumference of main body 21 matches outer circumference 28 of region A2.

In addition, each of the plurality of first radiator fins 22 extends in a direction toward the outer edge of main body 21 and terminates before the outer edge of main body 21 (i.e., outer circumference 28). Each of the plurality of first radiator fins 22 extends in the direction toward the outer edge of main body 21, to inner circumference 27 of region A2 having an annular shape. More specifically, each of the plurality of first radiator fins 22 extends from ring member 23 as a starting point to inner circumference 27 of region A2 having an annular shape. In other words, the plurality of first radiator fins 22 are each arranged radially with respect to axis B1 (center point C1) in the region except the circular region at the center of metal member 20 in the plan view (i.e., the region where ring member 23 and second through-hole H2 are provided).

As described above, each of the plurality of first radiator fins 22 extends to inner circumference 27 of region A2, and thus, stated differently, inner circumference 27 is also the circumscribed circle of the plurality of first radiator fins 22 in the plan view. Thus, the diameter of inner circumference 27 illustrated in FIG. 2 and FIG. 5 is an index indicating the magnitude (distance D1) of the plurality of first radiator fins 22.

Here, distance D1 is to be explained using first radiator fins 221a and 221b illustrated in FIG. 2. The two first radiator fins 221a and 221b are two first radiator fins 221 facing each other across axis B1 (center point C1). In addition, the diameter of inner circumference 27 described above is distance D1 from the end of first radiator fin 221a (the end of the x-axis negative side) to the end of first radiator fin 221b (the x-axis positive side), and indicates the magnitude of the plurality of first radiator fins 22.

In the present embodiment, outside diameter D2 of main body 21 is larger than the diameter of outer circumference 28 of region A2, and the diameter of outer circumference 28 of region A2 is larger than the diameter of inner circumference 27 of region A2 (i.e., distance D1).

The diameter of inner circumference 27 (i.e., distance D1) is optionally in a range of from 25 mm to 65 mm, more optionally in a range of from 30 mm to 50 mm, and yet more optionally in a range of from 34 mm to 38 mm.

Furthermore, the shape of the plurality of first radiator fins 22 is to be described.

In the present embodiment, twelve first heat dissipation fins 22 are provided. In the plan view, twelve first radiator fins 22 are arranged to radially extend. More specifically, the twelve first radiator fins 22 are arranged to extend radially with respect to axis B1. Thus, the twelve first radiator fins 22 form a shape extending radially about center point C1 of fluorescent substrate 10 in the plan view. The twelve first radiator fins 22 extend radially about center point C1, spreading at equal intervals.

For example, when n first radiator fins 22 are provided, "spreading at equal intervals" means that an angle formed by the direction in which one first radiator fin 22 extends and the direction in which another first radiator fin 22 that is adjacent to the one first radiator fin 22 extends is an angle obtained by dividing 360 degrees by n. FIG. 1 shows direction D11 in which one first radiator fin 22 extends and direction D12 in which another first radiator fin 22 that is adjacent to the one first radiator fin 22 extends, with the dash-dot lines. In the present embodiment, out of the twelve first radiator fins 22, an angle formed by direction D11 in which one first radiator fin 22 extends and direction D12 in which another first radiator fin 22 extends is 30 degrees. Note that a total of twelve first radiator fins 22 are provided here, but the present embodiment is not limited to this, and a total number of first radiator fins 22 may be one or more.

As illustrated in FIG. 2 and FIG. 4, the plurality of first radiator fins 22 each include second side surface 223 at a position most distant from axis B1. Second side surfaces 223 of the plurality of first radiator fins 22 are slanting surfaces that spread in the positive z-axis direction. Second side surfaces 223 that are slanting surface are not parallel to the z axis.

Since metal member 20 includes the plurality of first radiator fins 22, the surface area of metal member 20 increases, and thus heat is more readily dissipated from metal member 20. Accordingly, heat generated in fluorescent substrate 10 due to being irradiated with excitation light L1 is more readily dissipated from fluorescent substrate 10.

In the present embodiment, metal member 20 includes Al. Al is a metal material having high thermal conductivity, which is 237 W/m·K. The thermal conductivity of YAG included in the fluorescent material is 11.2 W/m·K. Accordingly, since metal member 20 includes Al, heat dissipation property of fluorescent substrate 10 can be further enhanced.

Note that metal member 20 may include a material other than Al or Cu, and may include one or more metal elements selected from among Ni, Pd, Rh, Mo, W, and Cu or an alloy that includes one or more of the metal elements, for example. The elements have thermal conductivity as follows: thermal conductivity of Ni is 83 W/m·K, thermal conductivity of Pd is 73 W/m·K, thermal conductivity of Rh is 150 W/m·K,thermal conductivity of Mo is 135 W/m·K, thermal conductivity of W is 163 W/m·K, and thermal conductivity of Cu is 395 W/m·K. Accordingly, heat dissipation property of fluorescent substrate 10 can be further enhanced by making metal member 20 using such metal materials.

Openings 206 are each provided between the plurality of first radiator fins 22 in metal member 20 in the plan view of metal member 20. More specifically, openings 206 are each provided between the plurality of first radiator fins 22 in a region where none of second through-hole H2, ring member 23, and main body 21 is provided in the plan view of metal member 20.

Metal member 20 includes the plurality of openings 206, thereby enabling air currents generated when fluorescent substrate 10, for example, is rotated by rotator 30 to flow from the z-axis positive side (the first principal surface 11 side) to z-axis negative side (the second principal surface 12 side) of fluorescent substrate 10.

Note that, as the area of openings 206 in metal member 20 increases in the plan view of metal member 20, the heat generated in fluorescent substrate 10 due to being irradiated with excitation light L1 is more readily cooled. In view of the above, the width of the plurality of first radiator fins 22 may be narrowed and the width of the annular region of main body 21 may be narrowed within the permissible strength range of metal member 20 depending on the product to which phosphor wheel 1 is applied, thereby maximizing the above-described area of openings 206.

Next, rotator 30 is to be described.

Rotator 30 is located on the z-axis negative side with respect to metal member 20. In other words, metal member 20 is located between rotator 30 and fluorescent substrate 10. Here, rotator 30 is bonded to metal member 20. Rotator 30 is provided at a position that overlaps fluorescent substrate 10, in the plan view.

Rotator 30 is a member that rotates fluorescent substrate 10 and metal member 20 about axis B1 that extends in the thickness direction (z-axis direction) of fluorescent substrate 10, and is a motor as an example. More specifically, in the present embodiment, rotator 30 rotates fluorescent substrate 10 and metal member 20 about axis B1 in the direction indicated by arrow R illustrated in FIG. 1. Note that rotator 30 may rotate fluorescent substrate 10 and metal member 20 in the direction opposite the direction indicated by arrow R illustrated in FIG. 1. As described above, axis B1 passes through center point C1 of fluorescent substrate 10.

In addition, rotator 30 includes disc 31 and rotation shaft 32 having a center along axis B1. Disc 31 is a plate-shaped member having a circular shape in the plan view, as illustrated in FIG. 2.

As described above, rotator 30 is bonded to metal member 20. More specifically, disc 31 is bonded to the plurality of first radiator fins 22 that metal member 20 includes. Disc 31 and the plurality of first radiator fins 22 may be bonded to each other using bolts or screws, for instance. In the present embodiment, disc 31 is bonded to first radiator fins 22 with a bonding layer being provided therebetween. In this case, as an example of the bonding layer, a bonding layer same as the bonding layer that bonds metal member 20 and fluorescent substrate 10 to each other is used.

In addition, as described above, rotation shaft 32 is fitted into second through-hole H2.

As stated above, phosphor wheel 1 according to the present embodiment includes rotator 30. With this configuration, fluorescent substrate 10, for instance, rotates about axis B1, and thus air currents are generated. Fluorescent substrate 10 is cooled by the generated air currents. In this manner, a rise in temperature of fluorescent substrate 10 can be inhibited even when fluorescent substrate 10 is irradiated with excitation light L1, and thus a thermal quenching phenomenon is less likely to occur and a decrease in fluorescence is inhibited. In other words, the efficiency of light usage of phosphor wheel 1 can be enhanced.

As described above, in the present embodiment, first radiator fins 22 that metal member 20 includes are arranged to extend radially. Thus, when fluorescent substrate 10, for instance, is rotated by rotator 30, air currents having a higher flow velocity are generated.

Furthermore, in the present embodiment, first through-hole H1 and second through-hole H2 are arranged to overlap each other. Accordingly, when fluorescent substrate 10, for instance, is rotated by rotator 30, air currents having a still higher flow velocity are generated.

In the present embodiment, the plurality of first radiator fins 22 are provided between main body 21 and disc 31. In this case, space is provided between one first radiator fin 22 and another first radiator fin 22 that is adjacent to the one first radiator fin 22. Thus, the provided space contributes to reduction in weight of metal member 20. Accordingly, rotator 30 can rotate fluorescent substrate 10 and metal member 20 using less energy.

### [Comparison Example]

The following describes the comparison between phosphor wheel 1 according to the present embodiment and a phosphor wheel according to a comparison example.

The phosphor wheel according to the comparison example has the same configuration as the configuration of phosphor wheel 1 according to the present embodiment other than that metal member 20x is provided in place of metal member 20.

FIG. 6 is a perspective view of metal member 20 according to the present embodiment and metal member 20x according to the comparison example.

FIG. 6 illustrates a perspective view of three phosphor wheels with the scale adjusted. In addition, FIG. 6 illustrates two dash-dot lines L3 and two dash-double-dot lines L4 to schematically indicate the respective scales of the three phosphor wheels. In FIG. 6, (a) and (c) are perspective views of metal member 20x according to the comparison example, and (b) is a perspective view of metal member 20 according to the present embodiment.

Metal member 20x has the same configuration as the configuration of metal member 20 other than that metal member 20x includes main body 21x in place of main body 21 and includes a plurality of first radiator fins 22x in place of the plurality of first radiator fins 22.

Main body 21x according to the comparison example has the same configuration as the configuration of main body 21 other than that outside diameter D2 is changed to outside diameter D2x. The plurality of first radiator fins 22x according to the comparison example have the same configuration as the configuration of the plurality of first radiator fins 22 other than that distance D1 is changed to distance D1x.

Note that, in the comparison example, outside diameter D2x and distance D1x are same in value. In addition, outside diameter D2x of metal member 20x (i.e. distance D1x) illustrated in (a) of FIG. 6 is same in value as distance D1 of metal member 20 illustrated in (b) of FIG. 6. In other words, main body 21x illustrated in (a) of FIG. 6 is a smaller component compared to main body 21 illustrated in (b) of FIG. 6. Outside diameter D2x of metal member 20x (i.e. distance D1x) illustrated in (c) of FIG. 6 is same in value as outside diameter D2 of metal member 20 illustrated in (b) of FIG. 6. In other words, the plurality of first radiator fins 22x illustrated in (c) of FIG. 6 are larger components compared to the plurality of first radiator fins 22 illustrated in (b) of FIG. 6.

In other words, in the present embodiment, the relationship of outside diameter D2 > distance D1 is satisfied, whereas in the comparison example, the relationship of outside diameter D2x = distance D1x is satisfied.

The results of evaluating the heat dissipation property and noise characteristics of phosphor wheel 1 and the phosphor wheel according to the comparison example are illustrated in FIG. 7 and FIG. 8.

FIG. 7 illustrates a graph showing the temperature rise of fluorescent substrate 10 when distance D1x and outside diameter D2x according to the comparison example are changed and outside diameter D2 according to the present embodiment is changed. FIG. 8 illustrates a graph showing the area integral value of pressure fluctuations in fluorescent substrate 10 when distance D1x and outside diameter D2x of the comparison example according to the comparison example are changed and outside diameter D2 according to the present embodiment is changed. Note that the area integral value of the pressure fluctuations correlates with the generated noise, and it is indicated that noise is smaller as the area integral value of the pressure fluctuations decreases.

In FIG. 7 and FIG. 8, the horizontal axis indicates distance D1x, outside diameter D2x, and outside diameter D2. Note that in FIG. 7 and FIG. 8, distance D1 according to the present embodiment remains constant at 34 mm.

First, the heat dissipation property is to be explained with reference to FIG. 7. The graph illustrated in FIG. 7 shows values calculated by thermal fluid simulation, indicating the temperature rise of fluorescent substrate 10 when the phosphor wheel according to the present embodiment and the comparison example is rotated at an ambient air temperature of 30 degrees Celsius. As illustrated in FIG. 7, as distance D1x, outside diameter D2x, and outside diameter D2 increase, the temperature rise of fluorescent substrate 10 decreases. This is considered to be because as distance D1x, outside diameter D2x, and outside diameter D2 increase, the surface areas of metal members 20 and 20x become larger, making it easier for heat to dissipate from fluorescent substrate 10.

Furthermore, as described above, distance D1 according to the present embodiment is constant at 34 mm, while D1x according to the comparison example is at least 34 mm and at most 38 mm, as indicated in FIG. 7. Thus, within the range illustrated in FIG. 7, distance D1 is less than or equal to distance D1x. In other words, the surface area of the plurality of first radiator fins 22 according to the present embodiment is less than or equal to the surface area of the plurality of first radiator fins 22x according to the comparison example. In other words, it can also be considered that the heat dissipation property of fluorescent substrate 10 included by phosphor wheel 1 according to the present embodiment is reduced compared to the phosphor wheel according to the comparison example.

However, within the range where distance D1x, outside diameter D2x, and outside diameter D2 are less than or equal to 36 mm, the values of temperature rise of fluorescent substrate 10 in the phosphor wheel according to the comparison example and in phosphor wheel 1 according to the present embodiment are substantially equivalent. In other words, within the above-described range, the heat dissipation properties of fluorescent substrate 10 in the phosphor wheels of the comparison example and the present embodiment are substantially equivalent, and it is thus clear that the phosphor wheels of the comparison example and the present embodiment possess high heat dissipation properties.

Furthermore, the noise characteristics are to be explained with reference to FIG. 8. The graph illustrated in FIG. 8 indicates the area integral value of pressure fluctuations calculated by fluid analysis, and indicates the noise characteristics generated when the phosphor wheel according to the present embodiment and the phosphor wheel according to the comparison example are rotated. As illustrated in FIG. 8, it is clear that in the comparison example, the area integral value of pressure fluctuations increases as distance D1x and outside diameter D2x increase, resulting in greater noise. In contrast, in the present embodiment, the area integral value of pressure fluctuations remains constant even when outside diameter D2 increases, inhibiting an increase in noise.

As illustrated in FIG. 7 and FIG. 8, in the comparison example, the heat dissipation property of fluorescent substrate 10 improves when distance D1x and outside diameter D2x increase, and thus the thermal quenching phenomenon is less likely to occur. As a result, it is possible to increase the efficiency of light usage. However, increasing distance D1x and outside diameter D2x also increases noise, and thus it is difficult to simultaneously achieve both improved efficiency of light usage and noise suppression.

In contrast, in the present embodiment, the heat dissipation property of fluorescent substrate 10 improves when outside diameter D2 increases, and thus the thermal quenching phenomenon is less likely to occur. As a result, it is possible to increase the efficiency of light usage. Furthermore, noise is inhibited from increasing even when outside diameter D2 increases. In other words, phosphor wheel 1 achieving both high efficiency of light usage and suppressed noise is implemented.

### [Variation 1]

The following describes Variation 1 of the embodiment. In the present variation, the structural components common to the embodiment are assigned with the same reference signs, and redundant descriptions will be omitted.

In the foregoing embodiment, metal member 20 and fluorescent substrate 10 are bonded by a bonding layer, thereby causing fluorescent substrate 10 to be held by metal member 20, but are not limited to this. In Variation 1 of the embodiment, phosphor wheel 1a further includes substrate holder 40.

FIG. 9 is an exploded perspective view of phosphor wheel 1a according to the present variation.

phosphor wheel 1a has the same configuration as the configuration of phosphor wheel 1, other than that phosphor wheel 1a further includes substrate holder 40.

Substrate holder 40 is disposed on; that is, provided to second principal surface 12 of fluorescent substrate 10. Substrate holder 40 is located on the z-axis positive side of fluorescent substrate 10. In the present variation, rotator 30 rotates fluorescent substrate 10, metal member 20, and substrate holder 40 about axis B1 that extends in the thickness direction (z-axis direction) of fluorescent substrate 10. As with metal member 20, the material of substrate holder 40 is Al which is lightweight and highly heat-conductive, taking into consideration a load onto rotator 30 that is a motor and thermal conductivity, but this is not limited to this.

Substrate holder 40 is a plate-shaped member provided, being stacked over fluorescent substrate 10. Substrate holder 40 has a circular shape in the plan view. Substrate holder 40 includes two principal surfaces on opposite sides from each other, one of which is a principal surface on the z-axis positive side and the other is a principal surface on the z-axis negative side. Here, the principal surface on the z-axis positive side and the principal surface on the z-axis negative side are planes parallel to each other. In addition, substrate holder 40 is provided with an opening located at a position that overlaps, in the plan view, opening 206 provided in the plurality of first radiator fins 22.

Here, the positional relationship between substrate holder 40 and fluorescent substrate 10 is to be described with reference to FIG. 10.

FIG. 10 is a cross sectional view illustrating a cut surface of the portions of substrate holder 40, metal member 20, and fluorescent substrate 10 according to the present variation. FIG. 10 is a diagram corresponding to FIG. 4, in the present variation.

As illustrated in FIG. 10, substrate holder 40 and main body 21 clamp fluorescent substrate 10. More specifically, substrate holder 40 and holding region 26 of main body 21 clamp fluorescent substrate 10. Holding region 26 is recessed by thickness t1 compared to fit region 25 as described above, and the thickness of the gap between the principal surface on the z-axis negative side of substrate holder 40 and holding region 26 is equal to thickness t1. In the present variation, substrate holder 40 and metal member 20 may be joined together by a bolt or a screw, for example. This enables substrate holder 40 and metal member 20 to clamp fluorescent substrate 10. Furthermore, a bonding layer need not necessarily be provided between holding region 26 and first principal surface 11 of fluorescent substrate 10. In other words, in the present variation, metal member 20 may be directly in contact with first principal surface 11 of fluorescent substrate 10 without using a bonding layer. In such a case where no bonding layer is provided as described above, thickness t1 is the same as thickness t2 of fluorescent substrate 10. This enables substrate holder 40 and main body 21 to securely clamp fluorescent substrate 10. In addition, when no bonding layer is provided as described above, holding region 26 is a region that is, on third principal surface 211, directly in contact with first principal surface 11 of fluorescent substrate 10, and holds fluorescent substrate 10.

### [Variation 2]

The following describes Variation 2 of the embodiment. In the present variation, the structural components common to the embodiment and Variation 1 are assigned with the same reference signs, and redundant descriptions will be omitted.

The present variation differs from the above-described Variation 1 in the positional relationship of metal member 20b and fluorescent substrate 10.

FIG. 11 illustrates a cross-sectional perspective view of phosphor wheel 1b according to Variation 2 and a cross-sectional perspective view of phosphor wheel 1a according to Variation 1. Note that, in FIG. 11, the illustration of rotator 30 is omitted for simplicity. FIG. 11 illustrates a cross-sectional perspective view of phosphor wheel 1a in (a), and a cross-sectional perspective view of phosphor wheel 1b in (c). FIG. 11 illustrates, in (b), an enlarged cross-sectional perspective view indicating the region enclosed by the rectangle of dash-dot line in (a) of FIG. 11. FIG. 11 illustrates, in (d), an enlarged cross-sectional perspective view indicating the region enclosed by the rectangle of dash-dot line in (c) of FIG. 11. The cross-sectional perspective views illustrated in FIG. 11 are each a cross-sectional perspective view indicating a cut surface parallel to the yz plane passing through center point C1 of fluorescent substrate 10.

In (b) and (d) of FIG. 11, phosphor wheels 1a and 1b are illustrated with the scale adjusted. FIG. 11 illustrates three dash-double-dot lines to schematically indicate the respective scales of phosphor wheels 1a and 1b.

Phosphor wheel 1b has the same configuration as the configuration of phosphor wheel 1a, other than that phosphor wheel 1b includes metal member 20b in place of metal member 20.

As described above, phosphor wheel 1a includes substrate holder 40, and likewise, phosphor wheel 1b also includes substrate holder 40. Here, fluorescent substrate 10 of phosphor wheel 1a includes clamped region A3 that is clamped between substrate holder 40 and main body 21. Fluorescent substrate 10 of phosphor wheel 1b also includes clamped region A3 that is clamped between substrate holder 40 and main body 21.

Phosphor wheel 1a according to Variation 1 of the embodiment is to be described once again with reference to FIG. 11. In phosphor wheel 1a, as illustrated in (b) of FIG. 11, a portion of clamped region A3 of fluorescent substrate 10 is provided between first radiator fin 22 and substrate holder 40. In other words, in the plan view, a portion of first radiator fin 22 and a portion of clamped region A3 are provided in an overlapped manner. More specifically, a portion of clamped region A3 is located directly below (on the z-axis positive side) a portion of second side surface 223 of first radiator fin 22. Clamped region A3 is provided in both the "finned" region and the "finless" region illustrated in (b) of FIG. 11. In the "finned" region, the thickness of metal member 20 in the z-axis direction is the combined thicknesses of main body 21 and first radiator fin 22, which is thick. In the "finless" region, the thickness of metal member 20 in the z-axis direction is the thickness of main body 21 alone, which is thin. In other words, in Variation 1, clamped region A3 of fluorescent substrate 10 is clamped by substrate holder 40 and the "finned" region and the "finless" region which differ in thickness.

The following further describes phosphor wheel 1b according to Variation 2. In phosphor wheel 1b, as illustrated in (d) of FIG. 11, clamped region A3 included in fluorescent substrate 10 is not provided between first radiator fin 22 and substrate holder 40. In other words, in the plan view, first radiator fin 22 and clamped region A3 are provided in a non-overlapped manner. More specifically, clamped region A3 is not located directly below (on the z-axis positive side) second side surface 223 of first radiator fin 22. Clamped region A3 is not provided in the "finned" region illustrated in (d) of FIG. 11, but is provided in the "finless" region. Thus, in Variation 2, clamped region A3 of fluorescent substrate 10 is clamped by substrate holder 40 and the "finless" region which is constant in thickness.

The following further describes clamped region A3 of fluorescent substrate 10 according to Variation 2 with reference to FIG. 12. FIG. 12 is a plan view of fluorescent substrate 10 according to Variation 2.

As illustrated in FIG. 12, in a plan view, clamped region A3 included in fluorescent substrate 10 has an annular shape, and clamped region A3 corresponds to the region between the two circles indicated by the dash-double-dot line. Clamped region A3 corresponds to the region between inner circumference 13 which is closer to center point C1 than outer circumference 14 is and outer circumference 14 which is farther from center point C1 than inner circumference 13 is in the plan view. Note that inner circumference 13 of clamped region A3 refers to the inner circumference of phosphor substrate 10 having a circular shape (more specifically, annular shape).

The diameter of first through-hole H1 of fluorescent substrate 10 according to Variation 2 is larger than the diameter of first through-hole H1 of fluorescent substrate 10 according to Variation 1.

Fit region 25 has a circular shape in the plan view in Variations 1 and 2, and the diameter of fit region 25 according to Variation 2 is larger than the diameter of fit region 25 according to Variation 1.

Holding region 26 has an annular shape in the plan view in Variations 1 and 2, and the diameter of the inner circumference of holding region 26 according to Variation 2 is larger than the diameter of the inner circumference of holding region 26 according to Variation 1.

The following further describes the stress generated in fluorescent substrate 10 according to Variations 1 and 2. FIG. 13 is a diagram illustrating the distribution of the stresses generated in fluorescent substrate 10 according to Variations 1 and 2. More specifically, (a) in FIG. 13 is a diagram illustrating the distribution of the stresses generated in fluorescent substrate 10 according to Variation 1, and (b) in FIG. 13 is a diagram illustrating the distribution of the stresses generated in fluorescent substrate 10 according to Variation 2. FIG. 13 illustrates fluorescent substrate 10 in the plan view, with the region of fluorescent substrate 10 enclosed by the rectangle of dash-dot line enlarged. The stresses are values calculated by simulation, and are higher at locations with darker colors. In addition, the stress values indicated in FIG. 13 are normalized values.

In fluorescent substrate 10 according to Variation 1, the locations overlapping the plurality of first radiator fins 22 in the plan view are indicated with dark colors, which indicates that the stress is high. When high stress is generated in fluorescent substrate 10 as described above, there can be a problem where fluorescent substrate 10 is damaged. On the other hand, in fluorescent substrate 10 according to Variation 2, there are fewer locations with dark colors compared to fluorescent substrate 10 according to Variation 1, showing that high stress is not generated.

As described above, in Variation 1, it can be considered that since metal member 20 holds (clamps) clamped region A3 in both the "finned" region and the "finless" region which differ in thickness, high stress has been generated in fluorescent substrate 10. On the other hand, in Variation 2, it can be considered that since metal member 20 holds (clamps) clamped region A3 in the "finless" region which is constant in thickness, the generation of high stress in fluorescent substrate 10 has been inhibited.

In this manner, in Variation 2, the generation of high stress is inhibited, and thus problems such as damage to fluorescent substrate 10 are inhibited from occurring.

### [Variation 3]

The following describes Variation 3 of the embodiment. In the present variation, the structural components common to the embodiment, Variation 1, and Variation 2 are assigned with the same reference signs, and redundant descriptions will be omitted.

A phosphor wheel according to the present variation differs from phosphor wheel 1a according to Variation 1 in that the phosphor wheel according to the present variation includes metal member 20c in place of metal member 20.

FIG. 14 and FIG. 15 are perspective views of metal member 20c according to the present variation. Metal member 20c includes main body 21, a plurality of first radiator fins 22, a plurality of second radiator fins 224, and ring member 23. FIG. 14 illustrates the fourth principal surface 212 side (the z-axis negative side) of main body 21, and FIG. 15 illustrates the third principal surface 211 side (the z-axis positive side) of main body 21.

Metal member 20c according to the present variation differs from metal member 20 according to Variation 1 in that metal member 20c further includes a plurality of second radiator fins 224.

The plurality of second radiator fins 224 are arranged on main body 21 to protrude in the direction from first principal surface 11 toward second principal surface 12 (i.e., the positive z-axis direction) included in fluorescent substrate 10. Note that the direction from first principal surface 11 toward second principal surface 12 is the second direction that is opposite to the first direction. The plurality of second radiator fins 224 are regions in contact with main body 21 and protrude in the positive z-axis direction.

In the plan view, the plurality of second radiator fins 224 are arranged radially with respect to axis B1 (center point C1). In the present variation, the plurality of second radiator fins 224 extend radially with respect to center point C1 and spread at equal intervals in the plan view in the region except second through-hole H2 on the z-axis positive side of metal member 20c.

One second radiator fin 224 is positioned to overlap one first radiator fin 22 in the plan view. The same holds true for the remaining second radiator fins 224 other than the one second radiator fin 224. Here, in the plan view, the plurality of second radiator fins 224 (nine second radiator fins 224, here) are each located to overlap the position of a corresponding one of the plurality of first radiator fins 221 (nine first radiator fins 221, here). Note that three more second radiator fins 224 may be provided to be each located to overlap the position of a corresponding one of three first radiator fins 222. The plurality of second radiator fins 224 are also connected to ring member 23.

FIG. 16 is a side view of metal member 20c according to the present variation. Thicknesses t3 that is the thickness of each of the plurality of first radiator fins 22 and thickness t4 of each of the plurality of second radiator fins 224 are illustrated. Thickness t3 of each of the plurality of first radiator fins 22 is identical among the plurality of first radiator fins 22. Thickness t4 of each of the plurality of second radiator fins 224 is identical among the plurality of second radiator fins 224. As illustrated in FIG. 16, thickness t3 and thickness t4 are the heights of first radiator fin 22 and second radiator fin 224, respectively, in the z-axis direction. Thickness t4 of the plurality of second radiator fins 224 may be different for different first radiator fins 22. Thickness t4 is smaller than thickness t3, but is not limited to this. Thickness t4 may be greater than thickness t3.

As described in the embodiment, thickness t3 of each of the plurality of first radiator fins 22 is optionally in a range of from 1 mm to 150 mm, more optionally in a range of from 2 mm to 30 mm, and yet more optionally in a range of from 3 mm to 10 mm, as an example. In addition, thickness t4 of each of the plurality of second radiator fins 224 is optionally in a range of from 1 mm to 150 mm, more optionally in a range of from 2 mm to 30 mm, and yet more optionally in a range of from 3 mm to 10 mm, as an example. The greater thickness t3 and thickness t4 are, the more heat dissipation effects can be enhanced. On the other hand, when thickness t3 and thickness t4 increase, the weight increases, leading to an increase in a load applied onto rotator 30 that is a motor.

Since metal member 20c further includes the plurality of second radiator fins 224 in addition to the plurality of first radiator fins 22, the surface area of metal member 20c increases, and thus heat is more readily dissipated from metal member 20c. Accordingly, heat generated in fluorescent substrate 10 due to being irradiated with excitation light L1 is more readily dissipated from fluorescent substrate 10. As a result, the occurrence of a thermal quenching phenomenon in fluorescent substrate 10 is more reduced, and thus efficiency of light usage can be increased In other words, in the present variation, a phosphor wheel achieving higher efficiency of light usage is implemented.

### [Variation 4]

The following describes Variation 4 of the embodiment. In the present variation, the structural components common to the embodiment, Variation 1, Variation 2, and Variation 3 are assigned with the same reference signs, and redundant descriptions will be omitted.

Phosphor wheel 1d according to the present variation differs from phosphor wheel 1a according to Variation 1 in that phosphor wheel 1d according to the present variation includes fluorescent substrate 10d in place of fluorescent substrate 10, and includes metal member 20d in place of metal member 20.

Before describing phosphor wheel 1d according to Variation 4, a potential problem that may arise in phosphor wheel 1a according to Variation 1 is to be described. FIG. 17 is a cross sectional view of phosphor wheel 1a according to Variation 1, and FIG. 18 is a perspective view of phosphor wheel 1a according to Variation 1. FIG. 17 is a diagram corresponding to FIG. 10.

In Variation 1, holding region 26 is recessed by thickness t1 compared to fit region 25. The thickness of the gap between the principal surface of substrate holder 40 on the z-axis negative side and holding region 26 is also equal to thickness t1. Thus, it has been explained that thickness t1 is the same value as thickness t2 of fluorescent substrate 10.

Here, a case is studied assuming that thickness t1 is greater than thickness t2. In this case, as illustrated in FIG. 17, a gap is generated between second principal surface 12 of fluorescent substrate 10 and the principal surface of substrate holder 40 on the z-axis negative side. FIG. 17 indicates thickness t5 of this gap. That is, in this case, thickness t1 is the same value as the sum value of thickness t2 and thickness t5. Thus, it becomes difficult for substrate holder 40 and main body 21 to sufficiently clamp fluorescent substrate 10.

In this case, when rotator 30 rotates, metal member 20 and substrate holder 40 rotate sufficiently. However, as illustrated in FIG. 18, there is a risk that fluorescent substrate 10 does not rotate sufficiently because it is not sufficiently clamped. In other words, while metal member 20 and substrate holder 40 rotate sufficiently, there is a risk that only fluorescent substrate 10 may spin free. As a result, the heat generated due to being irradiated with excitation light L1 cannot be sufficiently dissipated, leading to a decrease in the heat dissipation property of fluorescent substrate 10. Consequently, a thermal quenching phenomenon occurs, leading to a decrease in the fluorescence generated in fluorescent substrate 10.

Phosphor wheel 1d according to Variation 4 is capable of solving such problems.

FIG. 19 is an exploded perspective view of phosphor wheel 1d according to the present variation. Phosphor wheel 1d includes fluorescent substrate 10d, metal member 20d, rotator 30, and substrate holder 40.

First, metal member 20d is to be described.

Metal member 20d has the same configuration as the configuration of metal member 20 other than that main body 21 of metal member 20d includes protruding portion 29.

Main body 21 according to the present variation includes, in holding region 26, protruding portion 29 which protrudes in the direction from first principal surface 11 to second principal surface 12 of fluorescent substrate 10d (i.e., the positive z-axis direction). In other words, main body 21 includes protruding portion 29 that protrudes from holding region 26 in the positive z-axis direction. Main body 21 includes three protruding portions 29. Holding region 26 is, inn third principal surface 211, a region that is in a direct contact with first principal surface 11 of fluorescent substrate 10d, and holds fluorescent substrate 10d. In the present variation, in the plan view, the angle formed by the direction from center point C1 toward one protruding portion 29 and the direction from center point C1 toward another protruding portion 29 is 120°. In addition, in the plan view, the angle formed by the direction from center point C1 toward the one protruding portion 29 and the direction from center point C1 toward yet another protruding portion 29 is 120°. The three protruding portions 29 are arranged in three directions spreading at equal intervals from center point C1, but are not limited to this.

The following further describes protruding portion 29 with reference to FIG. 20.

FIG. 20 is a perspective view illustrating an enlarged region XX of FIG. 19. Protruding portion 29 is provided in holding region 26 and is in contact with fit region 25. The shape of protruding portion 29, in the plan view, is semicircular but is not limited to this; it may also be circular, rectangular, polygonal, or the like. Furthermore, protruding portion 29 need not necessarily be in contact with fit region 25.

The thickness of protruding portion 29 in the z-axis direction; that is, the distance from holding region 26 to the surface of protruding portion 29 on the z-axis positive side, is, for example, identical to thickness t1, but is not limited to this. When the thickness of protruding portion 29 in the z-axis direction is identical to thickness t1, the surface of protruding portion 29 on the z-axis positive side is flush with the surface of fit region 25 on the z-axis positive side. Note that the three protruding portions 29 are same in thickness in the z-axis direction, but are not limited to this.

The following further describes fluorescent substrate 10d according to the present variation with reference to FIG. 19 and FIG. 21. FIG. 21 is a perspective view illustrating an enlarged region XXI of FIG. 19 Fluorescent substrate 10d illustrated in FIG. 21 has the same configuration as the configuration of fluorescent substrate 10 illustrated in FIG. 17 and FIG. 18, other than that fluorescent substrate 10d is provided with fitting portion 16.

Fluorescent substrate 10d according to the present variation is provided with fitting portion 16 that is fitted to protruding portion 29 included in main body 21. More specifically, fluorescent substrate 10d is provided with three fitting portions 16. Note that a total number of protruding portions 29 and a total number of fitting portions 16 are the same, and protruding portions 29 and fitting portions 16 are in a one-to-one relationship.

Fitting portion 16 is an opening that is fitted to protruding portion 29. One protruding portion 29 is inserted into one fitting portion 16. In the present variation, fitting portion 16 is a notch, but is not limited to this; fitting portion 16 may also be a through-hole penetrating through fluorescent substrate 10d, or a recess defined in fluorescent substrate 10d. Each of the three fitting portions 16 is provided at a position to be fitted to a corresponding one of the three protruding portions 29.

The following further provides a description with reference to FIG. 22.

FIG. 22 is a cross-sectional perspective view of fluorescent substrate 10d and metal member 20d according to the present variation. The cross-sectional perspective view illustrated in FIG. 22 illustrates a cut surface that passes through center point C1 of fluorescent substrate 10d and is parallel to the yz plane. FIG. 22 illustrates an enlarged view of the region enclosed by the rectangle indicated by the dash-dot lines.

As illustrated in FIG. 22, one protruding portion 29 is fitted to one fitting portion 16. In the present variation, each of the three fitting portions 16 is fitted to a corresponding one of the three protruding portions 29.

In addition, in the present variation as well, holding region 26 may be recessed by thickness t1 compared to fit region 25, the thickness of the gap between the principal surface of substrate holder 40 on the z-axis negative side and holding region 26 may be also equal to thickness t1, and thickness t1 may be the same value as thickness t2 of fluorescent substrate 10d.

Here, in the present variation, a case is studied assuming that thickness t1 is greater than thickness t2. In this case, as described above, similar to Variation 1, it becomes difficult for substrate holder 40 and main body 21 to sufficiently clamp fluorescent substrate 10d.

However, in the present variation, when rotator 30 rotates, metal member 20d and substrate holder 40 rotate sufficiently, and since protruding portion 29 is fitted to fitting portion 16 of fluorescent substrate 10d, fluorescent substrate 10d also rotates sufficiently. More specifically, when rotator 30 rotates, since protruding portion 29 is hooked in fitting portion 16, fluorescent substrate 10d rotates along with the rotation of metal member 20d. In other words, in the present variation, the problem that fluorescent substrate 10d does not rotate sufficiently; that is, only fluorescent substrate 10d spins free is less likely to occur. As a result, heat generated due to being irradiated with excitation light L1 can be sufficiently dissipated, and thus the heat dissipation property of fluorescent substrate 10d is improved, making the thermal quenching phenomenon even less likely to occur and thereby increasing the efficiency of light usage. In other words, phosphor wheel 1d that is even higher in efficiency of light usage is implemented.

In the present variation, as described above, the shape of protruding portion 29 is semicircular in the plan view. For example, when the shape of protruding portion 29 is rectangular in the plan view, problems such as damage to fluorescent substrate 10d are likely to occur as a result of a corner of the rectangle contacting fluorescent substrate 10d when fluorescent substrate 10d rotates. However, in the present variation, since the shape of protruding portion 29 is semicircular in the plan view, no such a corner as described above is present, and thus problems such as damage to fluorescent substrate 10d are less likely to occur.

Note that the shapes and positions of protruding portion 29 and fitting portion 16 are not limited to the above. FIG. 23 is a plan view illustrating another example of fluorescent substrate 10d according to the present variation. For example, fitting portion 16 need not be a notch as illustrated in FIG. 19 to FIG. 22, but may be a through-hole penetrating through fluorescent substrate 10d as illustrated in FIG. 23. FIG. 24 is a perspective view illustrating another example of metal member 20d according to the present variation. FIG. 24 is a diagram corresponding to FIG. 20. Fitting portion 16 of fluorescent substrate 10d illustrated in FIG. 23 is fitted to protruding portion 29 included in main body 21 of metal member 20d illustrated in FIG. 24. As illustrated in FIG. 24, protruding portion 29 need not be in contact with fit region 25, and protruding portion 29 has a cylindrical shape. Note that the shape of protruding portion 29 is not limited to a cylindrical shape and may also be a conical shape, a prismatic shape, a pyramidal shape, etc. In addition, the shape of fitting portion 16 in the plan view is not limited to a circular shape, and may be any shape, including a polygonal shapes, as long as fitting in protruding portion 29 is possible.

In Variation 4, fitting portion 16 is provided on fluorescent substrate 10d and protruding portion 29 is provided on metal member 20d, but this is not limited to this. For example, protruding portion 29 may be provided on fluorescent substrate 10d and fitting portion 16 may be provided on metal member 20d. Protruding portion 29 may be provided on fluorescent substrate 10d, and fitting portion 16 may be provided on substrate holder 40. In addition, a total number of protruding portions 29 is not limited to three as indicated in Variation 4 as long as it is at least one, and the total number of protruding portions 29 and the total number of fitting portions 16 may be the same.

### [Advantageous Effects, etc.]

Invention 1 is, as described in the embodiment, phosphor wheel 1 that is transmissive. Phosphor wheel 1 includes: fluorescent substrate 10 that includes a fluorescent material, and includes first principal surface 11 and second principal surface 12 on opposite sides from each other; metal member 20 including: main body 21 that is disposed on first principal surface 11 of fluorescent substrate 10; and a plurality of first radiator fins 22 provided to main body 21, the plurality of first radiator fins 22 protruding in a first direction from second principal surface 12 toward first principal surface 11; and rotator 30 that rotates fluorescent substrate 10 and metal member 20 about axis B1 extending in a thickness direction of fluorescent substrate 10. In phosphor wheel 1, in a plan view of fluorescent substrate 10, fluorescent substrate 10 includes annular region A1 that does not overlap metal member 20, and in the plan view of fluorescent substrate 10, the plurality of first radiator fins 22 each extend in a direction from axis B1 toward an outer edge of main body 21 and terminate before the outer edge.

With this configuration, as illustrated in FIG. 7, the heat dissipation property of fluorescent substrate 10 improves when outside diameter D2 increases, and thus the thermal quenching phenomenon is less likely to occur. As a result, it is possible to increase the efficiency of light usage. Furthermore, as illustrated in FIG. 8, noise is suppressed from increasing even when outside diameter D2 increases. In other words, phosphor wheel 1 achieving high efficiency of light usage and suppressed noise is implemented.

Invention 2 is, as described in the embodiment, phosphor wheel 1 according to Invention 1, in which, in a plan view of metal member 20, opening 206 is provided in a region between the plurality of first radiator fins 22 of metal member 20.

With this configuration, it is possible to cause air currents generated when fluorescent substrate 10, for example, is rotated by rotator 30 to flow from the z-axis positive side (the first principal surface 11 side) to the z-axis negative side (the second principal surface 12 side) of fluorescent substrate 10. As a result, the heat generated in fluorescent substrate 10 is readily dissipated. In other words, the heat dissipation property of fluorescent substrate 10 can be enhanced, and thus the thermal quenching phenomenon is less likely to occur. As a result, it is possible to increase the efficiency of light usage. Thus, phosphor wheel 1 achieving high efficiency of light usage and suppressed noise is implemented.

Invention 3 is, as described in Variation 1, phosphor wheel 1a according to Invention 1 or 2 which further includes substrate holder 40 that is disposed on second principal surface 12, and in which substrate holder 40 and main body 21 clamp fluorescent substrate 10.

With this configuration, it is possible to reliably clamp fluorescent substrate 10 by substrate holder 40 and main body 21.

Invention 4 is, as described in Variation 2, phosphor wheel 1b according to Invention 3, in which fluorescent substrate 10 includes clamped region A3 where fluorescent substrate 10 is clamped by substrate holder 40 and main body 21, and in a plan view, clamped region A3 does not overlap the plurality of first radiator fins 22.

With this configuration, as illustrated in FIG. 13, the generation of high stress in fluorescent substrate 10 according to Variation 2 is inhibited, and thus problems such as damage to fluorescent substrate 10 are inhibited from occurring.

Invention 5 is, as described in Variation 4, phosphor wheel 1d according to Invention 3, in which main body 21 includes protruding portion 29 in holding region 26 where main body 21 is in contact with first principal surface 11 and holds fluorescent substrate 10, protruding portion 29 protrudes in a second direction that is opposite to the first direction, and fluorescent substrate 10 includes fitting portion 16 that is fitted to protruding portion 29.

With this configuration, when rotator 30 rotates, since protruding portion 29 is hooked in fitting portion 16, fluorescent substrate 10d rotates along with the rotation of metal member 20d. In other words, in Variation 4, the problem that fluorescent substrate 10d does not rotate sufficiently; that is, only fluorescent substrate 10d spins free, is less likely to occur. As a result, heat generated due to being irradiated with excitation light L1 can be sufficiently dissipated, and thus the heat dissipation property of fluorescent substrate 10d is improved, making the thermal quenching phenomenon even less likely to occur and thereby increasing the efficiency of light usage. In other words, phosphor wheel 1d achieving higher efficiency of light usage and suppressed noise is implemented.

Invention 6 is, as described in Variation 3, a phosphor wheel according to any one of Inventions 1 to 5, in which metal member 20c includes a plurality of second radiator fins 224 provided to main body 21, and the plurality of second radiator fins 224 protrude in a second direction that is opposite to the first direction.

With this configuration, since a plurality of second radiator fins 224 are provided, the surface area of metal member 20c increases, and thus the heat is more readily dissipated from metal member 20c. Accordingly, heat generated in fluorescent substrate 10 due to being irradiated with excitation light L1 is more readily dissipated from fluorescent substrate 10. As a result, the occurrence of a thermal quenching phenomenon is more reduced in fluorescent substrate 10, and thus the efficiency of light usage can be increased. In other words, a phosphor wheel achieving higher efficiency of light usage and suppressed noise is implemented.

Invention 7 is a light emitting device including the phosphor wheel according to any one of Inventions 1 to 6.

As described above, in the embodiment and Variations 1 to 4, a phosphor wheel achieving higher efficiency of light usage and suppressed noise is implemented. A light emitting device that includes such a phosphor wheel is a light emitting device (e.g., a projector or an illumination device) achieving higher efficiency of light usage and suppressed noise is implemented.

### (Other Embodiments)

The above has described, for instance, a phosphor wheel according to the present invention, based on the embodiment and the variations, but the present invention is not limited to the embodiment and the variations described above. The scope of the present invention includes embodiments resulting from applying various modifications, which may be conceived by those skilled in the art, to the embodiment and the variations, and other embodiments constructed by combining some structural components in the embodiment and the variations, without departing from the gist of the present invention.

It should be understood that, for example, the embodiment and the variations described above are mere examples, and thus various changes, additions, omissions, and so on, can be carried out.

In addition, for example, the aspect implemented by arbitrarily combining the structural components and functions stated in the above-described embodiment and variations are also included in the scope of the present disclosure. Those skilled in the art will readily appreciate that various modifications may be made in the embodiment and the variations of the embodiment described above, and that other embodiments may be obtained by arbitrarily combining the structural components and functions of the embodiment and the variations of the embodiment without materially departing from the novel teachings and advantages of the present disclosure. Accordingly, all such modifications and other embodiments are included in the present disclosure. In addition, for example, each of the structural components described in the foregoing embodiment and the variations may be combined into a new embodiment.

In addition, the structural components described in the attached Drawings and the detailed descriptions may include not only the structural components which are essential for solving the problems but also the structural components which are not essential for solving the problems but used for exemplifying the above-described techniques. As such, description of these non-essential structural components in the accompanying drawings and the detailed description should not be taken to mean that these non-essential structural components are essential.

### [Reference Signs List]

1, 1a, 1b, 1d phosphor wheel
10, 10d fluorescent substrate
11 first principal surface
12 second principal surface
16 fitting portion
20, 20b, 20c, 20d metal member
21 main body
22, 221, 221a, 221b, 222 first radiator fin
29 protruding portion
30 rotator
40 substrate holder
206 opening
224 second radiator fin
A1 region
A3 clamped region
B1 axis
L1 excitation light
L2 transmitted light

## Claims

1. A phosphor wheel that is transmissive, the phosphor wheel comprising:
a fluorescent substrate that includes a fluorescent material, and includes a first principal surface and a second principal surface on opposite sides from each other;
a metal member including: a main body that is disposed on the first principal surface of the fluorescent substrate; and a plurality of first radiator fins provided to the main body, the plurality of first radiator fins protruding in a first direction from the second principal surface toward the first principal surface; and
a rotator that rotates the fluorescent substrate and the metal member about an axis extending in a thickness direction of the fluorescent substrate, wherein
in a plan view of the fluorescent substrate, the fluorescent substrate includes an annular region that does not overlap the metal member, and
in the plan view of the fluorescent substrate, the plurality of first radiator fins each extend in a direction from the axis toward an outer edge of the main body and terminate before the outer edge.

2. The phosphor wheel according to claim 1, wherein
in a plan view of the metal member, an opening is provided in a region between the plurality of first radiator fins of the metal member.

3. The phosphor wheel according to claim 1, further comprising:
a substrate holder that is disposed on the second principal surface, wherein
the substrate holder and the main body clamp the fluorescent substrate.

4. The phosphor wheel according to claim 3, wherein
the fluorescent substrate includes a clamped region where the fluorescent substrate is clamped by the substrate holder and the main body, and
in a plan view, the clamped region does not overlap the plurality of first radiator fins.

5. The phosphor wheel according to claim 3, wherein
the main body includes a protruding portion in a holding region where the main body is in contact with the first principal surface and holds the fluorescent substrate, the protruding portion protruding in a second direction that is opposite to the first direction, and
the fluorescent substrate includes a fitting portion that is fitted to the protruding portion.

6. The phosphor wheel according to claim 1, wherein
the metal member includes a plurality of second radiator fins provided to the main body, the plurality of second radiator fins protruding in a second direction that is opposite to the first direction.

7. A light emitting device comprising:
the phosphor wheel according to any one of claims 1 to 6.
